# EUROPEAN PATENT APPLICATION

(11) **EP 3 779 828 A1**
(43) Date of publication of application: **17.02.2021**
(21) Application number: 19785235.3
(22) Date of filing: 14.02.2019
(51) Int. Cl.: G06Q 20/34

(54) **INFORMATION PROCESSING DEVICE AND INFORMATION PROCESSING METHOD**

(30) Priority: 10.04.2018 JP 2018075672
(71) Applicant: FeliCa Networks, Inc., Tokyo 141-0032 (JP)
(72) Inventor: MOTODATE, Kenichi, Tokyo 141-0032 (JP); HIROSE, Masahiko, Tokyo 141-0032 (JP); GOTO, Junji, Tokyo 141-0032 (JP)
(74) Representative: Witte, Weller & Partner Patentanwälte mbB
(86) International application number: PCT/JP2019/005176
(87) International publication number: WO 2019/198327

(57) **Abstract**

[Problem]

To provide an information processing apparatus capable of improving the convenience of a plurality of IC cards in the same IC service.

[Solution]

An information processing apparatus includes a management section that makes management while associating service information corresponding to a service with identification information that specifies a user, a decision section that decides on processing regarding service information on the basis of the identification information acquired, an instruction by the user acquired, the recording state of a recording medium acquired, and service information associated with the acquired identification information, and an execution section that executes the processing decided on.

## Description

### Field

The present disclosure relates to an information processing apparatus and an information processing method.

### Background

Currently, various IC services regarding integrated circuit (IC) cards are provided. For example, there is an IC service in which service information of an IC card is registered in a terminal such as a smartphone and thereby the smartphone can be used as an IC card simulatively. Further, pieces of service information of IC cards of a plurality of IC services can be registered in one smartphone, and accordingly a plurality of IC cards can be used on one smartphone simulatively.

With regard to the technology described above, for example, Patent Literature 1 below discloses a technology that centrally manages electronic values stored in a plurality of IC cards.

### Citation List

### Patent Literature

Patent Literature 1: JP 2009-110202 A

### Summary

### Technical Problem

However, in the technology described above, consideration is not given to using a plurality of IC cards differently. Further, in currently widespread technology, basically it is possible only to register, in one terminal, service information of one IC card per IC service. Hence, it is not possible to register a plurality of IC cards of the same IC service, and it is not possible to, in the same IC service, use a plurality of IC cards differently in accordance with uses.

Thus, the present disclosure proposes a new and improved information processing apparatus and a new and improved information processing method capable of improving the convenience of a plurality of IC cards in the same IC service.

### Solution to Problem

According to the present disclosure, an information processing apparatus is provided that includes: a management section that makes management while associating service information corresponding to a service with identification information that specifies a user; a decision section that decides on processing regarding service information on a basis of the identification information acquired, an instruction by the user acquired, a recording state of a recording medium acquired, and service information associated with the acquired identification information; and an execution section that executes the processing decided on.

Moreover, according to the present disclosure, an information processing apparatus is provided that includes: a control section that causes a recording state of service information corresponding to a service in a prescribed recording medium to be transmitted to an external apparatus managing service information, on a basis of an instruction by a user.

Moreover, according to the present disclosure, an information processing method that is executed by a processor is provided that includes: making management while associating service information corresponding to a service with identification information that specifies a user; deciding on processing regarding service information on a basis of the identification information acquired, an instruction by the user acquired, a recording state of a recording medium acquired, and service information associated with the acquired identification information; and executing the processing decided on.

Moreover, according to the present disclosure, an information processing method that is executed by a processor is provided that includes: causing a recording state of service information corresponding to a service in a prescribed recording medium to be transmitted to an external apparatus managing service information, on a basis of an instruction by a user.

### Advantageous Effects of Invention

As described above, according to the present disclosure, the convenience of a plurality of IC cards in the same IC service can be improved.

Note that the above effects are not necessarily limited, and it is possible to obtain any of effects described in this specification or other effects that can be detected from this specification together with or instead of the above effects.

### Brief Description of Drawings

FIG. 1 is an explanatory diagram illustrating an overview of an information processing system according to a comparative example of an embodiment of the present disclosure.
FIG. 2 is an explanatory diagram illustrating an overview of an information processing system according to the embodiment.
FIG. 3 is a block diagram illustrating a configuration example of the information processing system according to the embodiment.
FIG. 4 is a block diagram illustrating a functional configuration example of a server according to the embodiment.
FIG. 5 is an explanatory diagram illustrating kinds of the state of a card according to the embodiment.
FIG. 6 is an explanatory diagram illustrating transitions of the state of a card according to the embodiment.
FIG. 7 is an explanatory diagram illustrating kinds of processing of the server according to the embodiment.
FIG. 8 is an explanatory diagram illustrating transitions of data at the time of card issue (only the server) processing according to the embodiment.
FIG. 9 is an explanatory diagram illustrating transitions of data at the time of card issue processing according to the embodiment.
FIG. 10 is an explanatory diagram illustrating transitions of data at the time of card deletion (only the server) processing according to the embodiment.
FIG. 11 is an explanatory diagram illustrating transitions of data at the time of card deletion processing according to the embodiment.
FIG. 12 is an explanatory diagram illustrating transitions of data at the time of card activation (issue) processing according to the embodiment.
FIG. 13 is an explanatory diagram illustrating transitions of data at the time of card activation (switching) processing according to the embodiment.
FIG. 14 is an explanatory diagram illustrating transitions of data at the time of card activation (recovery) processing according to the embodiment.
FIG. 15 is an explanatory diagram illustrating transitions of data at the time of card deactivation processing according to the embodiment.
FIG. 16 is a block diagram illustrating a hardware configuration example of the server according to the embodiment.
FIG. 17 is a block diagram illustrating a functional configuration example of a client terminal according to the embodiment.
FIG. 18 is an explanatory diagram illustrating kinds of display processing of the client terminal according to the embodiment.
FIG. 19 is a block diagram illustrating a hardware configuration example of the client terminal according to the embodiment.
FIG. 20 is a block diagram illustrating a hardware configuration example of a second communication section of the client terminal according to the embodiment.
FIG. 21 is a block diagram illustrating a hardware configuration example of a reader/writer according to the embodiment.
FIG. 22 is a sequence diagram illustrating an operation example at the time of log-out/log-in processing according to the embodiment.
FIG. 23 is a sequence diagram illustrating an operation example at the time of card list acquisition processing according to the embodiment.
FIG. 24 is a sequence diagram illustrating an operation example at the time of card issue (only the server) processing according to the embodiment.
FIG. 25 is a sequence diagram illustrating an operation example at the time of card issue processing according to the embodiment.
FIG. 26 is a sequence diagram illustrating an operation example at the time of card deletion (only the server) processing according to the embodiment.
FIG. 27 is a sequence diagram illustrating an operation example at the time of card deletion processing according to the embodiment.
FIG. 28 is a sequence diagram illustrating an operation example at the time of card activation (switching) processing according to the embodiment.
FIG. 29 is a sequence diagram illustrating an operation example at the time of card deactivation processing according to the embodiment.
FIG. 30 is an explanatory diagram illustrating a first modification example according to the embodiment.
FIG. 31 is an explanatory diagram illustrating a second modification example according to the embodiment. Description of Embodiments

Hereinafter, preferred embodiments of the present disclosure will be described in detail with reference to the accompanying drawings. In this specification and the drawings, components having substantially the same functional configuration are denoted by the same reference numerals, and redundant description is omitted.

Note that the description will be provided in the following order.
1. Overview of an embodiment of the present disclosure
2. Information processing system according to the embodiment of the present disclosure
3. Server according to the embodiment of the present disclosure
4. Client terminal according to the embodiment of the present disclosure
5. Reader/writer according to the embodiment of the present disclosure
6. Operation examples
7. Modification examples
8. Conclusions

### <<1. Overview of an embodiment of the present disclosure>>

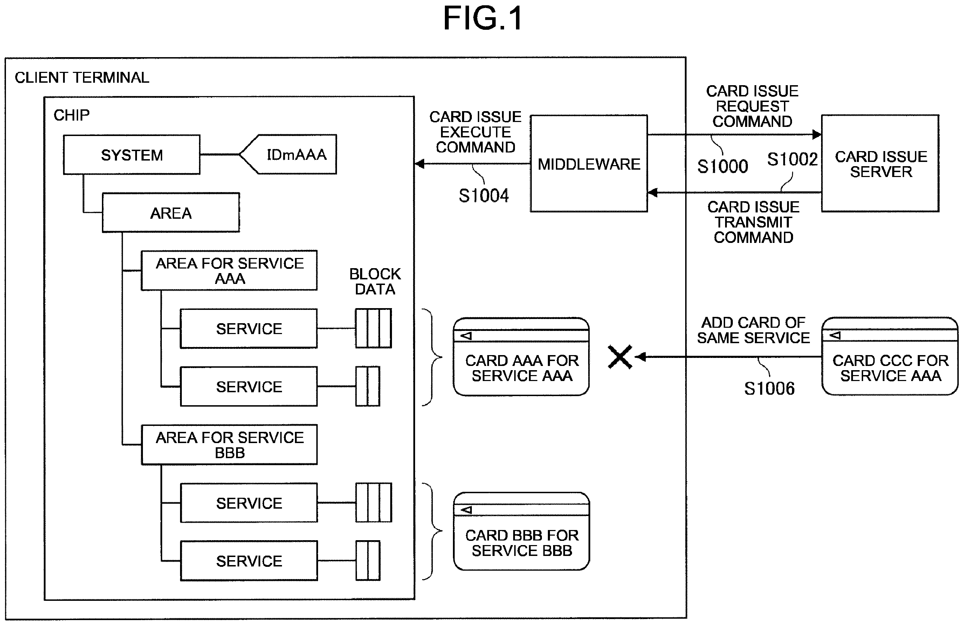

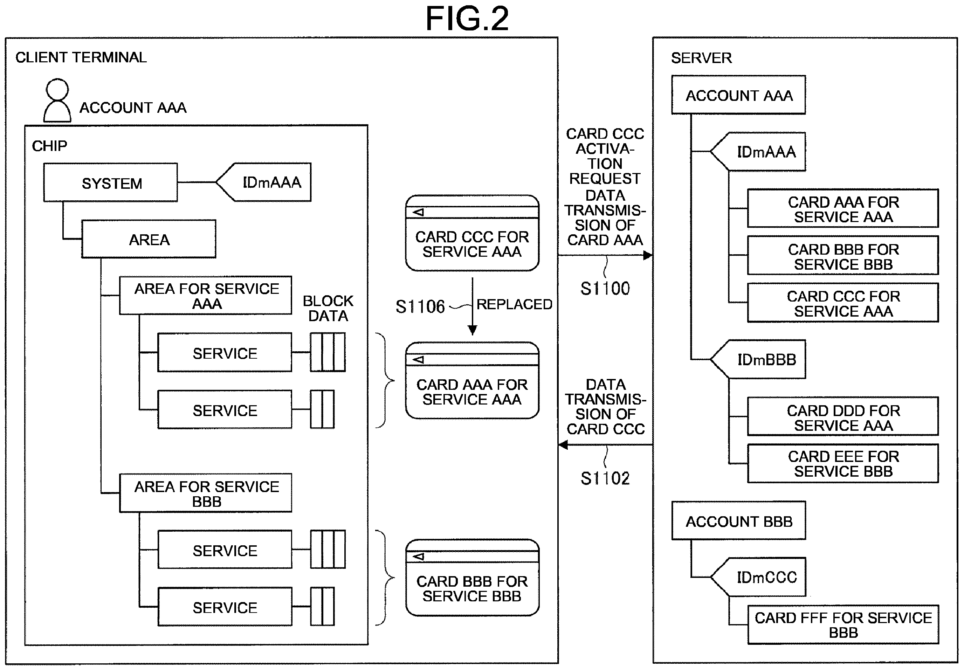

In an embodiment of the present disclosure, an example in which pieces of card information of IC cards in IC services are registered in a client terminal such as a smartphone and the client terminal is used as IC cards simulatively is described. In the following, an overview of the embodiment of the present disclosure is described with reference to FIG. 1 and FIG. 2. FIG. 1 is an explanatory diagram illustrating an overview of an information processing system according to a comparative example of the embodiment of the present disclosure. FIG. 2 is an explanatory diagram illustrating an overview of an information processing system according to the embodiment of the present disclosure.

In the following, service information is also referred to as card information. Identification information that specifies a user is also referred to as an account. Identification information that specifies a chip (a recording medium) of a client terminal is hereinafter also referred to as an IDm. The IDm is a unique ID number that is written on a chip used in IC services during the manufacturing of the chip. Identification information that specifies a card is also referred to as card identification information.

"Activation" is to bring a card into a usable state (hereinafter, also referred to as a valid state) in the client terminal. "Deactivation" is to bring a card into an unusable state (hereinafter, also referred to as an invalid state) in the client terminal. Whether a card is in the valid state or in the invalid state is managed by a blocking flag. For example, in the case where the blocking flag is OFF, the card information of the card is not in a blocked state, and accordingly the card is in the valid state. Further, in the case where the blocking flag is ON, the card information of the card is in a blocked state, and accordingly the card is in the invalid state.

Currently, various IC services regarding IC cards are provided. For example, there is an IC service in which service information of an IC card is registered in a terminal such as a smartphone and thereby the smartphone can be used as an IC card simulatively. Further, pieces of service information of IC cards of a plurality of IC services can be registered in one smartphone, and accordingly a plurality of IC cards can be used on one smartphone simulatively.

As illustrated in FIG. 1, an information processing system according to a comparative example of the present disclosure is composed of, for example, a client terminal and a card issue server. The client terminal according to the comparative example is composed of middleware that controls card issue processing and a chip (a recording medium) that records issued card information. In card issue processing, first, the middleware transmits a card issue command request to the card issue server (step S1000). The card issue server that has received the request transmits a card issue command to the middleware (step S1002). The middleware that has received the card issue command executes the card issue command, and thereby issues a card to the chip (step S1004).

As illustrated in FIG. 1, the region where the chip records information is composed of a "System", an "Area", an "area for area AAA for service", an "area for service BBB", and "services". An area for recording card information is provided subordinately to the region of the System. Subordinately to the Area, areas are provided on a service basis, namely, the area for service AAA and the area for service BBB are provided, in order to record card information on a service basis. By the middleware executing the card issue command described above, for example, the creation of a service and the writing of block data are performed subordinately to the area for service AAA; thus, card AAA for service AAA is issued. Also for the area for service BBB, card BBB for service BBB is issued similarly. The card is issued on a secure element.

In the chip in the comparative example, areas for service for respective services are provided subordinately to the Area, and therefore a plurality of cards can be issued. However, the number of cards that can be issued to areas for service is one per service; hence, in the case where a card is already issued on the secure element, another card of the same service as a service of the card mentioned above cannot be issued additionally. For example, in a state where card AAA for service AAA is already issued to the area for service AAA as illustrated in FIG. 1, card CCC for service AAA cannot be issued additionally (step S1006). Thus, the user cannot possess a plurality of cards of the same service in one client terminal.

An embodiment of the present disclosure proposes a technology capable of improving the convenience of a plurality of IC cards in the same IC service, which has been worked out with attention on the point mentioned above.

The technology according to the embodiment of the present disclosure associates card information with accounts on a server, manages a plurality of cards regardless of services or the number of cards, and achieves the replacement of card information between a client terminal and the server, for example. Thereby, the user can possess a plurality of cards of the same service. Further, the user may replace card information of the same service between the client terminal and the server in accordance with the situation at the time of using cards, and can thereby use a plurality of cards of the same service differently in one client terminal.

As illustrated in FIG. 2, an information processing system according to the embodiment of the present disclosure is composed of, for example, a client terminal and a server. The client terminal according to the embodiment of the present disclosure has a chip (a recording medium) that records issued card information, and performs the replacement of card information with the server, which manages card information. It is assumed that the configuration of the region where the chip records information is the same as the configuration in the chip according to the comparative example.

As illustrated in FIG. 2, the region where the server according to the embodiment of the present disclosure manages information is prepared on an account basis; subordinately to each account, regions are provided individually for client terminals on the basis of IDm, and card information is managed while being associated with the IDm. For example, the server can manage a plurality of accounts, like account AAA and account BBB. Further, the server can manage a plurality of client terminals, like IDm AAA and IDm BBB subordinate to account AAA. Further, the server can manage cards of a plurality of services and a plurality of cards of the same service, like card AAA for service AAA, card BBB for service BBB, and card CCC for service AAA subordinate to IDm AAA.

A description will now be given for processing of, in a state where card AAA for service AAA and card BBB for service BBB are issued to a chip of a client terminal as illustrated in FIG. 2, replacing card AAA for service AAA and card CCC for service AAA. First, the client terminal transmits a request to activate card CCC for service AAA to the server. At this time, the client terminal transmits also block data of card AAA for service AAA of a replacement object to the server, and performs the saving and deactivation of card information of card AAA for service AAA (step S1100) The server that has received the activation request transmits card information of card CCC for service AAA of a replacement object to the client terminal (step S1102). Then, the client terminal writes the received card information of card CCC for service AAA in the area for service AAA, where card information of card AAA for service AAA has been recorded, and activates card CCC for service AAA. Thereby, card AAA and card CCC are replaced (step S1106).

In the manner described above, the information processing system according to the embodiment of the present disclosure switches a card on the chip of the client terminal and another card of the same service managed on the server. Thereby, a situation where a plurality of cards of the same service can be used in one client terminal is created.

Hereinabove, an overview of the embodiment of the present disclosure is described with reference to FIG. 1 and FIG. 2. Next, an information processing system according to the embodiment of the present disclosure is described.

### <<2. Information processing system according to the embodiment of the present disclosure>>

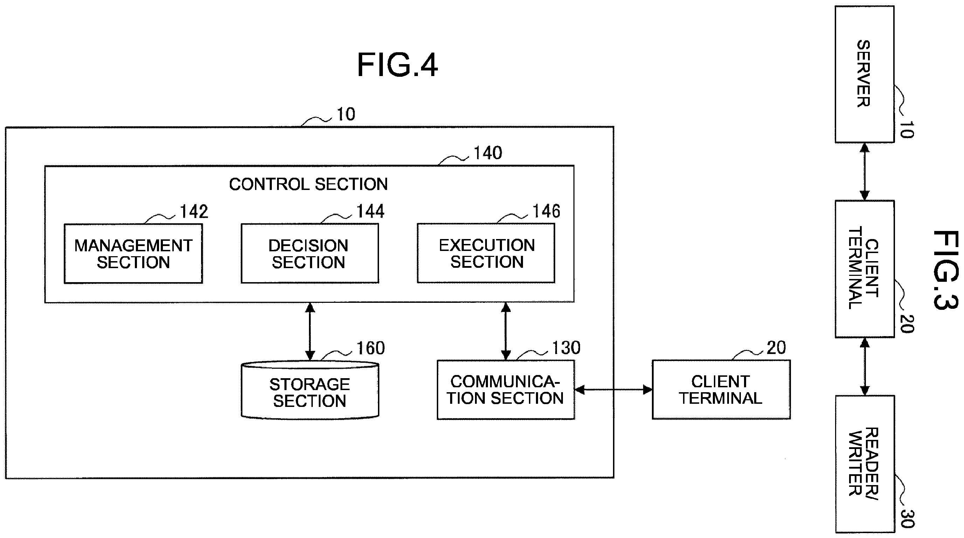

In in the following, an information processing system according to the embodiment of the present disclosure is described with reference to FIG. 3. FIG. 3 is a block diagram illustrating a configuration example of the information processing system according to an embodiment of the present disclosure. The information processing system according to the embodiment of the present disclosure includes, as illustrated in FIG. 3, a server 10, a client terminal 20, and a reader/writer 30.

The server 10 is an information processing apparatus that manages pieces of card information of cards used for IC services (hereinafter, also referred to as a first information processing apparatus). The server 10 is connected to the client terminal 20 by an arbitrary communication system. For example, the server 10 is connected to the client terminal 20 in a wireless or wired manner via a network, and makes communication by communication via the network (hereinafter, written as "network communication"). Examples of the network according to the embodiment of the present disclosure include wired networks such as a local area network (LAN) and a wide area network (WAN), wireless networks such as a wireless local area network (WLAN), the Internet using a communication protocol such as transmission control protocol/internet protocol (TCP/IP), and the like. The server 10 may be a configuration that makes direct communication with the client terminal 20.

The client terminal 20 is an information processing apparatus that provides IC services using card information recorded in a chip (hereinafter, also referred to as a second information processing apparatus). The reader/writer 30 is an apparatus that performs the reading and writing of card information. The client terminal 20 makes communication with the reader/writer 30 by, for example, near field wireless communication (near field communication; NFC) such as Type-A, Type-B, or Type-F. Thus, when the user brings the client terminal 20 close to the communication range of the reader/writer 30, communication by NFC is made.

Further, in the information processing system according to the present embodiment of the present disclosure, for example, the client terminal 20 may perform communication with and the reader/writer 30 in accordance with "wireless communication of an arbitrary communication scheme such as wireless communication using IEEE 802.15.1 such as Bluetooth low energy (BLE), wireless communication using IEEE 802.11, or infrared communication" or "wired communication using communication via a communication interface or the like based on a universal serial bus (USB) or ISO 7816 standard."

Further, the configuration of the information processing system according to the present embodiment of the present disclosure is not limited to the example illustrated in FIG. 3. For example, the information processing system according to the present embodiment of the present disclosure may include a plurality of servers 10. Further, the information processing system according to the present embodiment of the present disclosure may include a plurality of client terminals 20 or a plurality of the readers/writers 30.

In the information processing system according to the embodiment of the present disclosure, the server 10 may be a configuration that makes communication with the reader/writer 30.

Hereinabove, an information processing system according to the embodiment of the present disclosure is described with reference to FIG. 3. Next, the server 10 according to the embodiment of the present disclosure is described.

### <<3. Server according to the embodiment of the present disclosure>>

### <3.1. Functional configuration example>

In the following, a functional configuration example of the server 10 according to the embodiment of the present disclosure is described with reference to FIG. 4 to FIG. 15.

FIG. 4 is a block diagram illustrating a functional configuration example of a server 10 according to the embodiment of the present disclosure. As illustrated in FIG. 4, the server 10 according to the embodiment of the present disclosure includes a communication section 130, a control section 140, and a storage section 160.

### <3.1.1. Communication section 130>

The communication section 130 has the function of making communication with an external apparatus. For example, the communication section 130 makes communication with the client terminal 20. In communication with the client terminal 20, the communication section 130 outputs information received from the client terminal 20 to the control section 140. Further, in communication with the client terminal 20, the communication section 130 transmits information inputted from the control section 140 to the client terminal 20.

### <3.1.2. Control section 140>

The control section 140 has the function of controlling the whole of the server 10. For example, the control section 140 controls communication processing in the communication section 130 of the server 10. Specifically, the control section 230 causes the communication section 130 to transmit information outputted in accordance with processing executed by the control section 140 to the client terminal 20.

Further, the control section 140 decides on processing to be executed by the control section 140 and executes the processing on the basis of inputted information. Specifically, the control section 140 decides on processing to be executed by the control section 140 and executes the processing on the basis of at least one of information inputted from the storage section 160 and information received from the client terminal 20 that is inputted from the communication section 130.

Further, the control section 140 manages information stored by the storage section 160 of the server 10. Specifically, the control section 230 causes the storage section 160 of the client terminal 20 to store information outputted in accordance with processing executed by the control section 140.

To achieve the functions described above, the control section 140 according to the embodiment of the present disclosure includes a management section 142, a decision section 144, and an execution section 146.

### (1) Management section 142

The management section 142 has the function of managing card information. For example, the management section 142 associates card information corresponding to a service with an account of a user, and causes the storage section 160 to store the card information. Thereby, the management section 142 can manage card information for each user. Further, the management section 142 associates card information with an IDm and then associates the IDm with an account, and causes the storage section 160 to store the card information. Thereby, the management section 142 can manage card information for each client terminal 20 of each user. A specific relationship when associating the account, the IDm, and the card information described above with each other is as illustrated in the figure in the right side of FIG. 2.

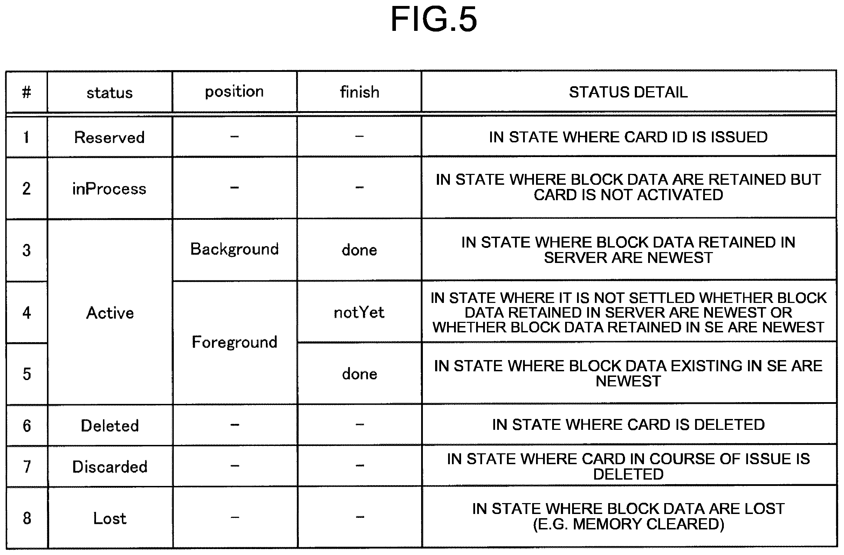

Further, the management section 142 manages the state of a card. The state of a card refers to the state of card information of a processing object after the control section 140 executes processing regarding the card information. Here, kinds of the state of a card according to the embodiment of the present disclosure are specifically described with reference to FIG. 5. FIG. 5 is an explanatory diagram illustrating kinds of the state of a card according to the embodiment of the present disclosure.

The "status" illustrated in FIG. 5 indicates the state of a card. For example, the "status" being "Reserved" indicates being in a state where a card ID is issued. The "status" being "inProcess" indicates being in a state where block data are retained but a card is not activated. The "status" being "Active" indicates being in a state where block data exist in at least one of the server 10 and the client terminal 20. The "status" being "Deleted" indicates being in a state where a card is deleted. The "status" being "Discarded" indicates being in a state where a card in the course of issue is deleted. The "status" being "Lost" indicates being in a state where block data are lost due to memory clearing or the like.

The "positon" illustrated in FIG. 5 indicates the retention site of block data. For example, the "position" being "Background" indicates that the retention site of block data is the server 10. The "position" being "Foreground" indicates that the retention site of block data is the client terminal 20.

The "finish" illustrated in FIG. 5 indicates whether the writing of block data on the retention site is finished or not. For example, the "finish" being "done" indicates being in a state where the writing of block data on the retention site is finished, that is, the content of block data is settled. The "finish" being "notYet" indicates being in a state where the writing of block data on the retention site is not finished, that is, the content of block data is not settled.

In the case where the "status" is "Active", the state of the card can be assessed in more detail by the combination of the "position" and the "finish" described above. For example, in the case where the "status" is "Active", the "position" is "Background", and the "finish" is "done", the block data retained in the server 10 are newest. Further, in the case where the "status" is "Active", the "position" is "Foreground", and the "finish" is "notYet", it is not settled whether the block data retained in the server 10 are newest or whether the block data retained in the client terminal 20 are newest. Further, in the case where the "status" is "Active", the "position" is "Foreground", and the "finish" is "done", the block data retained in the client terminal 20 are newest.

The "position" and the "finish" are set when the "status" is "Active".

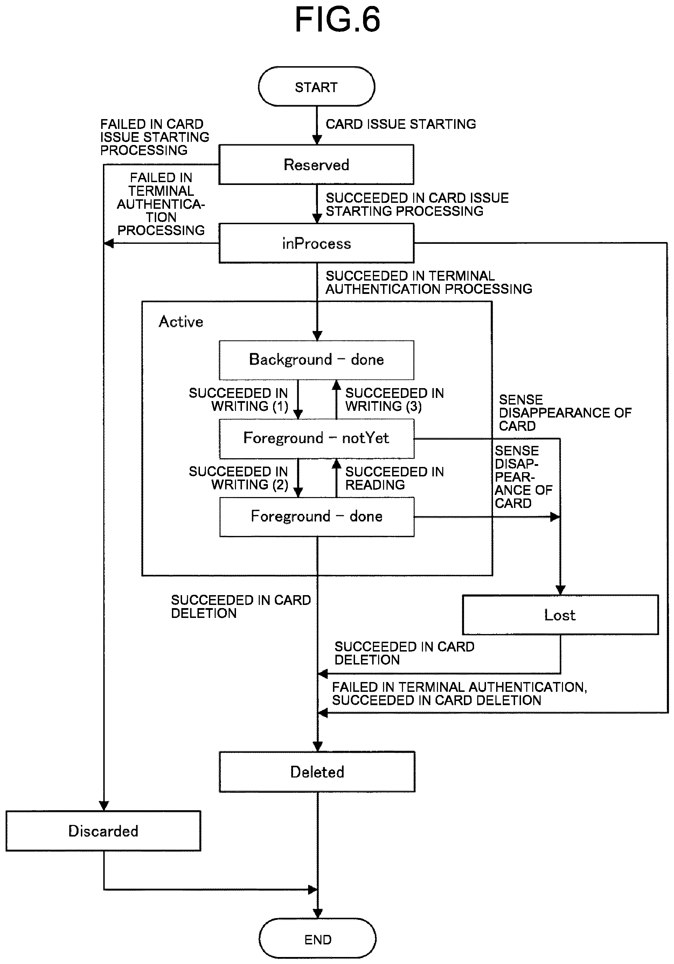

Hereinabove, kinds of the state of a card according to the embodiment of the present disclosure are described with reference to FIG. 5. Next, transitions of the state of a card according to the embodiment of the present disclosure are described with reference to FIG. 6. FIG. 6 is an explanatory diagram illustrating transitions of the state of a card according to the embodiment of the present disclosure.

As illustrated in FIG. 6, first, when a card issue request is inputted, the control section 140 sets "Reserved" as the "status". When the "status" is "Reserved", if the control section 140 succeeds in card issue starting processing, the control section 140 sets "inProcess" as the "status". If the control section 140 fails in card issue starting processing, the control section 140 sets "Discarded" as the "status", and ends the processing.

When the "status" is "inProcess", if the control section 140 succeeds in terminal authentication processing, the control section 140 sets "Active" as the "status", and sets "Background" as the "position" and "done" as the "finish". If the control section 140 fails in terminal authentication processing, the control section 140 sets "Discarded" as the "status", and ends the processing. Even if the control section 140 fails in terminal authentication processing, if it succeeds in the deletion of the card, it sets "Deleted" as the "status".

When the "status" is "Active", the control section 140 alters the settings of the "position" and the "finish" on the basis of information that has been written or read. For example, when the "position" is "Background" and the "finish" is "done", if the control section 140 succeeds in writing (1), which is processing of writing identification information, a blocking flag (ON), and data, the control section 140 alters the "position" to "Foreground" and the "finish" to "notYet". When the "position" is "Foreground" and the "finish" is "notYet", if the control section 140 succeeds in writing (2), which is processing of writing a blocking flag (OFF), the control section 140 alters the "finish" to "done". When the "position" is "Foreground" and the "finish" is "notYet", if the control section 140 succeeds in writing (3), which is processing of writing a blocking flag (ON), the control section 140 alters the "position" to "Foreground" and the "finish" to "done". When the "position" is "Foreground" and the "finish" is "done", if the control section 140 succeeds in reading that is processing of reading all data, the control section 140 alters the "finish" to "notYet".

When the "status" is "Active", if the control section 140 succeeds in the deletion of the card, the control section 140 sets "Deleted" as the "status", and ends the processing.

When the "status" is "Active", the "position" is "Foreground", and the "finish" is either of "notYet" and "done", if the control section 140 senses the disappearance of the card, the control section 140 sets "Lost" as the "statsu", and ends the processing.

Hereinabove, transitions of the state of a card according to the embodiment of the present disclosure are described with reference to FIG. 6. Next, the decision section 144 according to the embodiment of the present disclosure is described.

### (2) Decision section 144

The decision section 144 has the function of deciding on processing regarding card information. For example, the decision section 144 decides on processing regarding card information on the basis of an account acquired, a manipulation request (an instruction by a user) acquired, the recording state of a chip acquired, and card information associated with the acquired account. Specifically, on the basis of an account acquired, the decision section 144 specifies the client terminal 20 associated with the account, and acquires card information. Further, the decision section 144 acquires the state of the chip of the client terminal 20 specified. Then, the decision section 144 decides on processing regarding the acquired card information on the basis of the state of the chip acquired and a manipulation request by a user.

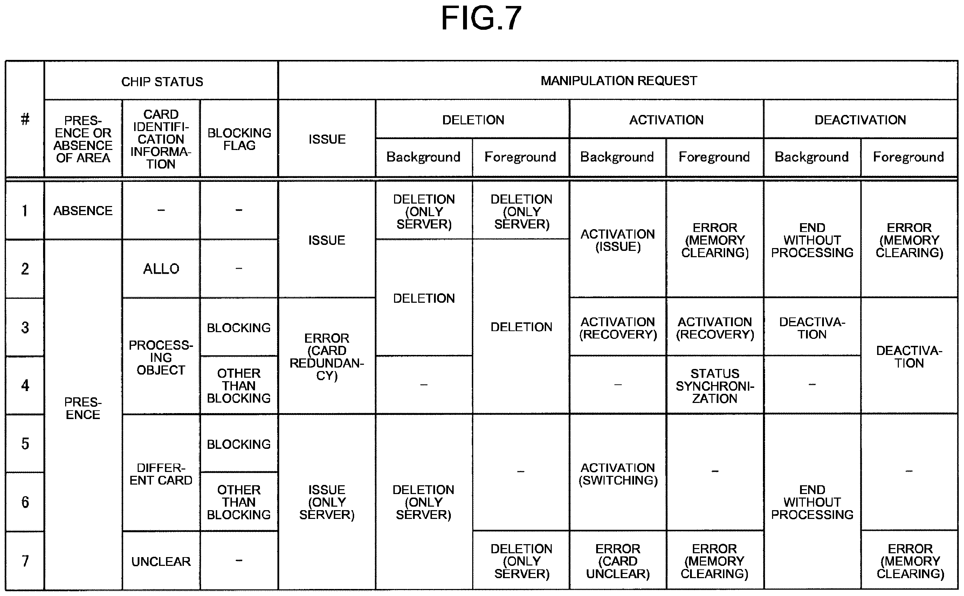

Here, processing decided on the basis of the combination of the state of the chip of the client terminal 20 according to the embodiment of the present disclosure and a manipulation request by a user is described with reference to FIG. 7. FIG. 7 is an explanatory diagram illustrating kinds of processing of the server according to the embodiment of the present disclosure.

As illustrated in FIG. 7, the state of the chip is decided on the basis of the combination of "the presence or absence of an area", "card identification information", and a "blocking flag". Further, as illustrated in FIG. 7, kinds of the manipulation request include a "card issue request", a "deletion request", an "activation request", and a "deactivation request". On the basis of the combination of the state of the chip and the manipulation request described above, the decision section 144 decides on processing to be executed by the execution section 146. In the case where the manipulation request is at least one of a deletion request, an activation request, and a deactivation request for a card, the decision section 144 decides on processing in consideration of a case where the "position" is "Background" or a case where the "position" is "Foreground".

FIG. 7 illustrates processing according to the combination of the state of the chip and the inputted manipulation request described above. Kinds of the processing include "issue (only the server) processing", "issue processing", "deletion (only the server) processing", "deletion processing", "activation (issue) processing", "activation (switching) processing", "activation (recovery) processing", "deactivation processing", "status synchronization processing", and "error processing".

The "issue (only the server) processing" is processing in which card information is newly created only in the server 10. The "issue processing" is processing in which card information is newly created in the server 10, the same card information is written also in an area of the chip of the client terminal 20, and a card corresponding to the card information is issued. In the "issue processing", in the case where an area where card information is to be written does not exist in the chip of the client terminal 20, an area may be issued to the chip.

The "deletion (only the server) processing" is processing in which, when card information of interest exists only in the server 10, only the card information of the server 10 is deleted. The "deletion processing" is processing of deleting card information from both the server 10 and the client terminal 20. The card information of the server 10 is logically deleted, and the card information of the client terminal 20 is physically deleted.

The "activation (issue) processing" is processing in which, when card information is already created in the server 10, the card information is written on the chip of the client terminal 20, a card corresponding to the card information is issued, and the card enters the valid state in the client terminal 20. The "activation (switching) processing" is processing of, in the same service, switching cards that can be used in the client terminal 20. Specifically, when another card of the same service as a service of a card of an activation object is in the valid state in the client terminal 20 and the card of an activation object is in the valid state in the server 10, first, the card information of the another card is updated with the card information of an activation object. Then, the card of an activation object is brought into the valid state in the client terminal 20; thus, the card that can be used in the client terminal 20 is switched from the another card to the card of an activation object. The "activation (recovery) processing" is processing of correctly recovering data when the consistency of data is lost due to a disconnection of communication or the like during card information updating processing. In the "activation (issue) processing", in the case where an area where card information is to be written does not exist in the chip of the client terminal 20, an area may be issued to the chip.

The "deactivation processing" is processing in which card information of the client terminal 20 is deleted and a card corresponding to the card information enters the invalid state in the client terminal 20. The card information is not deleted in the server 10.

The "status synchronization processing" is processing of, in the case where the consistency of the status is not found between card information of the server 10 and card information of the client terminal 20, performing synchronization processing to achieve the consistency of the status between the card information of the server 10 and the card information of the client terminal 20.

The "error processing" is processing of notifying an error. For example, at least one of the facts that a card of a processing object already exists and there is redundancy, that a card of a processing object is an unclear card, and that the memory of a card of a processing object has been cleared is notified.

Here, how the decision section 144 decides on processing to be executed by the execution section 146 on the basis of the combination of the state of the chip and the manipulation request is specifically described. In the following, an example of using card information of card AAA of service AAA illustrated in FIG. 2 (a first piece of service information) and card information of card CCC of service AAA (a second piece of service information) is described. It is assumed that the manipulation request inputted by the user illustrated in FIG. 7 is a manipulation request for the card information of card AAA. The "Background" illustrated in FIG. 7 indicates that the card information of card AAA is in the valid state in the server 10, and the "Foreground" indicates that the card information of card AAA is in the valid state in the client terminal 20.
(2-1) Case where the state of the chip is "area: absent"
   The decision section 144 performs any one of the following pieces of processing in accordance with the combination with the inputted manipulation request.
(2-1-1) Case where the manipulation request is "issue"
   In the case of the present combination, an area of card information does not exist in the chip, and therefore it is necessary to create card information also in the chip and issue a card. Thus, the decision section 144 decides on the "issue processing" described above as the processing to be executed by the execution section 146.
(2-1-2) Case where the manipulation request is "deletion (Background)"
   In the case of the present combination, in the chip, an area does not exist, and accordingly card information to be deleted does not exist, either. Further, the "position" is "Background", and hence card information in the valid state exists in the server 10. Thus, the decision section 144 decides on the "deletion (only the server) processing" described above as the processing to be executed by the execution section 146.
(2-1-3) Case where the manipulation request is "deletion (Foreground)"
   In the case of the present combination, processing similar to (2-1-2) described above, the case where the manipulation request is "deletion (Background)", is decided on as the processing to be executed by the execution section 146.
(2-1-4) Case where the manipulation request is "activation (Background)"
   In the case of the present combination, card information of card AAA is in the valid state in the server 10, an area of card information does not exist in the chip, and card information of card CCC does not exist in the chip. Thus, the decision section 144 decides on the "activation (issue) processing" described above as the processing to be executed by the execution section 146.
(2-1-5) Case where the manipulation request is "activation (Foreground)"
   In the case of the present combination, a manipulation request that card AAA managed in the valid state in the server 10 be brought into the valid state in the client terminal 20 has been inputted. However, in the chip, an area of card information does not exist, and card information of card AAA does not exist. Thus, the decision section 144 decides on, as the processing to be executed by the execution section 146, the "error processing" described above in which it is notified that the memory of the card has been cleared.
(2-1-6) Case where the manipulation request is "deactivation (Background)"
   In the case of the present combination, in the chip, an area does not exist, and accordingly card information to be deactivated does not exist, either. Thus, the decision section 144 decides to particularly not cause the execution section 146 to execute processing.
(2-1-7) Case where the manipulation request is "deactivation (Foreground)"
   In the case of the present combination, processing similar to (2-1-5) described above, the case where the manipulation request is "activation (Foreground)", is decided on as the processing to be executed by the execution section 146.
(2-2) Case where the state of the chip is "area: present", "card identification information: 0000"
   The decision section 144 performs any one of the following pieces of processing in accordance with the combination with the inputted manipulation request.
(2-2-1) Case where the manipulation request is "issue"
   In the case of the present combination, processing similar to (2-1-1) described above, the case where the manipulation request is "issue", is decided on as the processing to be executed by the execution section 146. In addition, in the case of the present combination, an area exists in the chip, and accordingly the execution section 146 does not execute processing of issuing an area in the "issue processing".
(2-2-2) Case where the manipulation request is "deletion (Background)"
   In the case of the present combination, the card identification information of card information of the chip is ALLO (all the digits are 0), and the memory is in a cleared state. Although the memory has been cleared, card information to be deleted still exists in the chip. Thus, the decision section 144 decides on the "deletion processing" described above as the processing to be executed by the execution section 146.
(2-2-3) Case where the manipulation request is "deletion (Foreground)"
   In the case of the present combination, processing similar to (2-2-2) described above, the case where the manipulation request is "deletion (Background)", is decided on as the processing to be executed by the execution section 146.
(2-2-4) Case where the manipulation request is "activation (Background)"
   In the case of the present combination, processing similar to (2-1-4) described above, the case where the manipulation request is "activation (Background)", is decided on as the processing to be executed by the execution section 146.
(2-2-5) Case where the manipulation request is "activation (Foreground)"
   In the case of the present combination, processing similar to (2-1-5) described above, the case where the manipulation request is "activation (Foreground)", is decided on as the processing to be executed by the execution section 146.
(2-2-6) Case where the manipulation request is "deactivation (Background)"
   In the case of the present combination, the decision section 144 decides to particularly not perform processing but end the procedure.
(2-2-7) Case where the manipulation request is "deactivation (Foreground)"
   In the case of the present combination, processing similar to (2-1-5) described above, the case where the manipulation request is "activation (Foreground)", is decided on as the processing to be executed by the execution section 146.
(2-3) Case where the state of the chip: an area is present, the card identification information is a processing object, and the blocking flag is ON
   The decision section 144 performs any one of the following pieces of processing in accordance with the combination with the inputted manipulation request.
(2-3-1) Case where the manipulation request is "issue"
   In the case of the present combination, card information of card AAA of an issue object already exists in the chip. Thus, the decision section 144 decides on, as the processing to be executed by the execution section 146, the "error processing" described above in which it is notified that a card is redundant.
(2-3-2) Case where the manipulation request is "deletion (Background)"
   In the case of the present combination, processing similar to (2-2-2) described above, the case where the manipulation request is "deletion (Background)", is decided on as the processing to be executed by the execution section 146.
(2-3-3) Case where the manipulation request is "deletion (Foreground)"
   In the case of the present combination, processing similar to (2-2-2) described above, the case where the manipulation request is "deletion (Background)", is decided on as the processing to be executed by the execution section 146.
(2-3-4) Case where the manipulation request is "activation (Background)"
   In the case of the present combination, the decision section 144 decides on the "activation (recovery) processing" described above as the processing to be executed by the execution section 146.
(2-3-5) Case where the manipulation request is "activation (Foreground)"
   In the case of the present combination, processing similar to (2-3-4) described above, the case where the manipulation request is "activation (Background)", is decided on as the processing to be executed by the execution section 146.
(2-3-6) Case where the manipulation request is "deactivation (Background)"
   In the case of the present combination, card information of card AAA is in the valid state in the chip. Thus, the decision section 144 decides on the "deactivation processing" described above as the processing to be executed by the execution section 146.
(2-3-7) Case where the manipulation request is "deactivation (Foreground)"
   In the case of the present combination, processing similar to (2-3-6) described above, the case where the manipulation request is "deactivation (Background)", is decided on as the processing to be executed by the execution section 146.
(2-4) Case where the state of the chip: an area is present, the card identification information is a processing object, and the blocking flag is OFF
   The decision section 144 performs any one of the following pieces of processing in accordance with the combination with the inputted manipulation request.
(2-4-1) Case where the manipulation request is "issue"
   In the case of the present combination, processing similar to (2-3-1) described above, the case where the manipulation request is "issue", is decided on as the processing to be executed by the execution section 146.
(2-4-2) Case where the manipulation request is "deletion (Background)"
   In the case of the present combination, in the embodiment of the present disclosure, the combination of the state of the chip of (2-4) and the manipulation request of "deletion (Background)" is a combination not occurring in terms of the control of the system.
(2-4-3) Case where the manipulation request is "deletion (Foreground)"
   In the case of the present combination, processing similar to (2-2-2) described above, the case where the manipulation request is "deletion (Background)", is decided on as the processing to be executed by the execution section 146.
(2-4-4) Case where the manipulation request is "activation (Background)"
   In the case of the present combination, in the embodiment of the present disclosure, the combination of the state of the chip of (2-4) and the manipulation request of "activation (Background)" is a combination not occurring in terms of the control of the system.
(2-4-5) Case where the manipulation request is "activation (Foreground)"
   In the case of the present combination, it is envisaged that card AAA is managed in the invalid state in the chip and hence the user has inputted a manipulation request in order to bring card AAA into the valid state in the client terminal 20. However, in the server 10, card AAA is managed in the valid state; therefore, the decision section 144 determines that the consistency of the state of the card is not found between the client terminal 20 and the server 10. Thus, the decision section 144 decides on the "status synchronization processing" described above as the processing to be executed by the execution section 146.
(2-4-6) Case where the manipulation request is "deactivation (Background)"
   In the case of the present combination, in the embodiment of the present disclosure, the combination of the state of the chip of (2-4) and the manipulation request of "deactivation (Background)" is a combination not occurring in terms of the control of the system.
(2-4-7) Case where the manipulation request is "deactivation (Foreground)"
   In the case of the present combination, processing similar to (2-3-6) described above, the case where the manipulation request is "deactivation (Background)", is decided on as the processing to be executed by the execution section 146.
(2-5) Case where the state of the chip: an area is present, the card identification information is a different card, and the blocking flag is ON
   The decision section 144 performs any one of the following pieces of processing in accordance with the combination with the inputted manipulation request.
(2-5-1) Case where the manipulation request is "issue"
   In the case of the present combination, card information of card CCC (a different card) exists in the chip. Thus, the decision section 144 decides on the "issue (only the server) processing" described above as the processing to be executed by the execution section 146.
(2-5-2) Case where the manipulation request is "deletion (Background)"
   In the case of the present combination, processing similar to (2-1-2) described above, the case where the manipulation request is "deletion (Background)", is decided on as the processing to be executed by the execution section 146.
(2-5-3) Case where the manipulation request is "deletion (Foreground)"
   In the case of the present combination, in the embodiment of the present disclosure, the combination of the state of the chip of (2-5) and the manipulation request of "deletion (Foreground)" is a combination not occurring in terms of the control of the system.
(2-5-4) Case where the manipulation request is "activation (Background)"
   In the case of the present combination, card information of card AAA is in the valid state in the server 10, and card CCC (a different card) exists in the chip. Thus, the decision section 144 decides on the "activation (switching) processing" described above as the processing to be executed by the execution section 146.
(2-5-5) Case where the manipulation request is "activation (Foreground)"
   In the case of the present combination, in the embodiment of the present disclosure, the combination of the state of the chip of (2-5) and the manipulation request of "activation (Foreground)" is a combination not occurring in terms of the control of the system.
(2-5-6) Case where the manipulation request is "deactivation (Background)"
   In the case of the present combination, the decision section 144 decides to particularly not perform processing but end the procedure.
(2-5-7) Case where the manipulation request is "deactivation (Foreground)"
   In the case of the present combination, in the embodiment of the present disclosure, the combination of the state of the chip of (2-5) and the manipulation request of "deactivation (Foreground)" is a combination not occurring in terms of the control of the system.
(2-6) Case where the state of the chip: an area is present, the card identification information is a processing object, and the blocking flag is OFF
   The decision section 144 performs any one of the following pieces of processing in accordance with the combination with the inputted manipulation request.
(2-6-1) Case where the manipulation request is "issue"
   In the case of the present combination, processing similar to (2-5-1) described above, the case where the manipulation request is "issue", is decided on as the processing to be executed by the execution section 146.
(2-6-2) Case where the manipulation request is "deletion (Background)"
   In the case of the present combination, processing similar to (2-1-2) described above, the case where the manipulation request is "deletion (Background)", is decided on as the processing to be executed by the execution section 146.
(2-6-3) Case where the manipulation request is "deletion (Foreground)"
   In the case of the present combination, in the embodiment of the present disclosure, the combination of the state of the chip of (2-6) and the manipulation request of "deletion (Foreground)" is a combination not occurring in terms of the control of the system.
(2-6-4) Case where the manipulation request is "activation (Background)"
   In the case of the present combination, processing similar to (2-5-4) described above, the case where the manipulation request is "activation (Background)", is decided on as the processing to be executed by the execution section 146.
(2-6-5) Case where the manipulation request is "activation (Foreground)"
   In the case of the present combination, in the embodiment of the present disclosure, the combination of the state of the chip of (6) and the manipulation request of "activation (Foreground)" is a combination not occurring in terms of the control of the system.
(2-6-6) Case where the manipulation request is "deactivation (Background)"
   In the case of the present combination, the decision section 144 decides to particularly not perform processing but end the procedure.
(2-6-7) Case where the manipulation request is "deactivation (Foreground)"
   In the case of the present combination, in the embodiment of the present disclosure, the combination of the state of the chip of (2-6) and the manipulation request of "deactivation (Foreground)" is a combination not occurring in terms of the control of the system.
(2-7) Case where the state of the chip: an area is present and the card identification information is unclear
   In this combination, the decision section 144 performs any one of the following pieces of processing in accordance with the combination with the inputted manipulation request.
(2-7-1) Case where the manipulation request is "issue"
   In the case of the present combination, processing similar to (2-5-1) described above, the case where the manipulation request is "issue", is decided on as the processing to be executed by the execution section 146.
(2-7-2) Case where the manipulation request is "deletion (Background)"
   In the case of the present combination, processing similar to (2-1-2) described above, the case where the manipulation request is "deletion (Background)", is decided on as the processing to be executed by the execution section 146.
(2-7-3) Case where the manipulation request is "deletion (Foreground)"
   In the case of the present combination, processing similar to (2-1-2) described above, the case where the manipulation request is "deletion (Background)", is decided on as the processing to be executed by the execution section 146.
(2-7-4) Case where the manipulation request is "activation (Background)"
   In the case of the present combination, the card identification information of the card of the chip is unclear, and it is not in a clear state what card of what service the card is. Therefore, the decision section 144 cannot determine what activation processing should be performed on the card. Thus, the decision section 144 decides on, as the processing to be executed by the execution section 146, the "error processing" described above in which it is notified that the card is unclear.
(2-7-5) Case where the manipulation request is "activation (Foreground)"
   In the case of the present combination, processing similar to (2-1-5) described above, the case where the manipulation request is "activation (Foreground)", is decided on as the processing to be executed by the execution section 146.
(2-7-6) Case where the manipulation request is "deactivation (Background)"
   In the case of the present combination, the decision section 144 decides to particularly not perform processing but end the procedure.
(2-7-7) Case where the manipulation request is "deactivation (Foreground)"
   In the case of the present combination, processing similar to (2-1-5) described above, the case where the manipulation request is "activation (Foreground)", is decided on as the processing to be executed by the execution section 146.

As described above, processing decided on the basis of the combination of the state of the chip of the client terminal 20 according to the embodiment of the present disclosure and a manipulation request by a user has been described with reference to FIG. 7. Next, the execution section 146 according to the embodiment of the present disclosure will be described.

### (3) Execution section 146

The execution section 146 has the function of executing processing. For example, the execution section 146 executes processing decided on by the decision section 144. The content of the processing is as described above. When executing processing decided on by the decision section 144, the execution section 146 executes the processing after making synchronization between data of card information of a processing object managed by the client terminal 20 and data of card information of a processing object recorded in the chip of the client terminal 20. Thereby, in the information processing system according to the embodiment of the present disclosure, data of a card can be mutually transferred while the integrity of the data of the card is maintained between the server 10 and the client terminal 20.

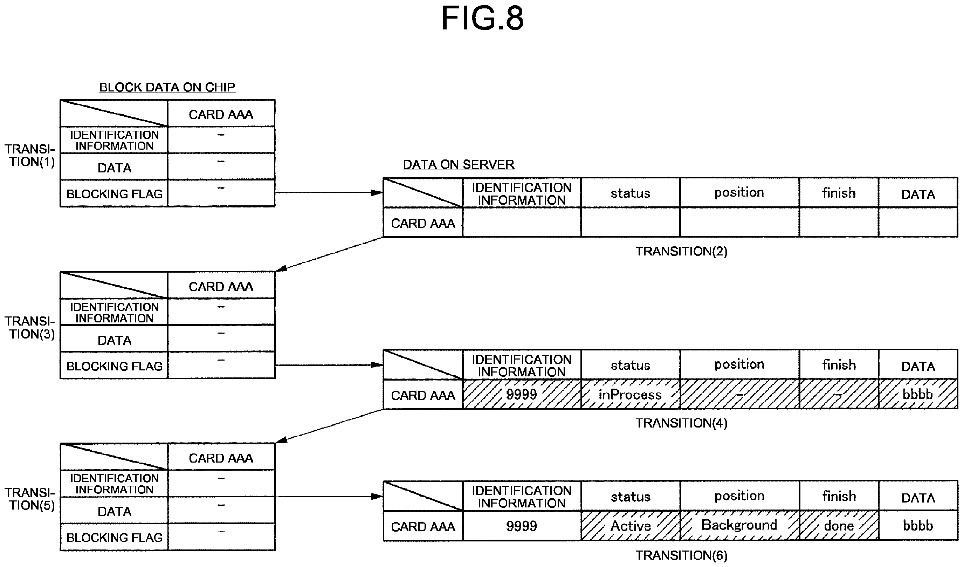

Here, transitions of data of a card when the execution section 146 has executed each of the pieces of processing decided on by the decision section 144 are described with reference to FIG. 8 to FIG. 15. The blank of the data on the server in FIG. 8 to FIG. 15 indicates the initial state in which data are not recorded, and "- (a hyphen)" indicates that data have not been generated or data have been cleared. Further, "- (a hyphen)" of the block data on the chip indicates that card information of a card different from a card of a processing object has been recorded. The hatching of the data on the server and the block data on the chip indicates that there has been a change since the last transition.

### (3-1) Card issue (only the server) processing

In the following, transitions of data in card issue (only the server) processing according to the embodiment of the present disclosure are described with reference to FIG. 8. FIG. 8 is an explanatory diagram illustrating transitions of data at the time of card issue (only the server) processing according to the embodiment of the present disclosure.

It is assumed that, when a card issue (only the server) request is inputted from the user, there is a situation where card information of another card is recorded in the block data on the chip (transition (1)) and card information is not recorded in the data on the server 10 (transition (2)).

In this case, card information is generated only in the server 10. For example, the server 10 generates, as card information, "identification information" (9999), "status" ("inProcess"), and "data" (bbbb) (transition (4)). Then, after succeeding in terminal authentication with the client terminal 20, the server 10 updates the "status" indicating the state of the card of the data on the server to "Active", the "position" to "Background", and the "finish" to "done" (transition (6)), and ends the card issue (only the server) processing. The block data on the chip are not updated, because they are card information of another card (transition (2) and transition (5)).

As describe above, transitions of data in card issue (only the server) processing according to the embodiment of the present disclosure have been described with reference to FIG. 8. Next, transitions of data in card issue processing according to the embodiment of the present disclosure are described.

### (3-2) Card issue processing

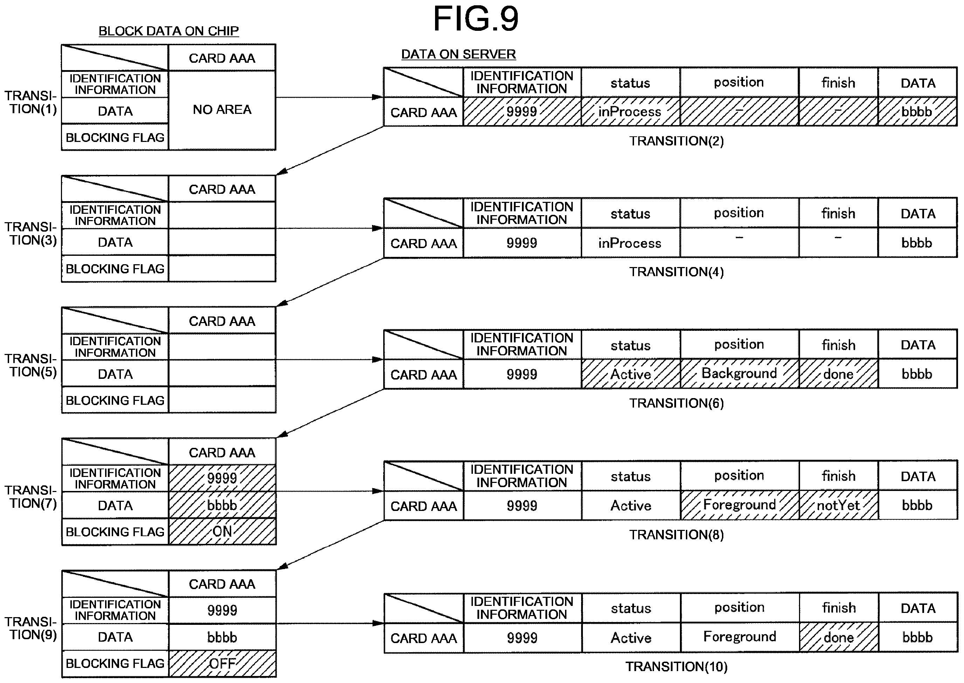

In the following, transitions of data in card issue processing according to the embodiment of the present disclosure are described with reference to FIG. 9. FIG. 9 is an explanatory diagram illustrating transitions of data at the time of card issue processing according to the embodiment of the present disclosure.

It is assumed that, when a card issue request is inputted from the user, there is no area in the block data on the chip (transition (1)). In this case, card information is generated in the data on the server 10. For example, the server 10 generates, as card information, "identification information" (9999), "status" ("inProcess"), and "data" (bbbb) (transition (2)). Next, the server 10 causes the chip of the client terminal 20 to issue an area (transition (3)), and receives the result of area issue (transition (4)). Then, the server 10 performs terminal authentication with the client terminal 20 (transition (5)).

After succeeding in the terminal authentication, the server 10 updates the "status" indicating the state of the card of the data on the server to "Active", the "position" to "Background", and the "finish" to "done" (transition (6)). After succeeding in the processing of updating the state of the card of the server 10, the server 10 writes "identification information" (9999) and "data" (bbbb) on the block data on the chip, and sets the blocking flag to ON (transition (7)). In the case of succeeding in the processing of updating to the state of transition (7), the server 10 updates the "position" of the data on the server to "Foreground" and the "finish" to "notYet" (transition (8)). After succeeding in the processing of updating to the state of transition (8), the server 10 updates the blocking flag of the block data on the chip to OFF (transition (9)). Then, in the case of succeeding in the processing of updating to the state of transition (9), the server 10 updates the "finish" of the data on the server to "done" (transition (10)), and ends the card issue processing.

Hereinabove, transitions of data in card issue processing according to the embodiment of the present disclosure are described with reference to FIG. 9. Next, transitions of data in card deletion (only the server) processing according to the embodiment of the present disclosure are described.

### (3-3) Card deletion (only the server) processing

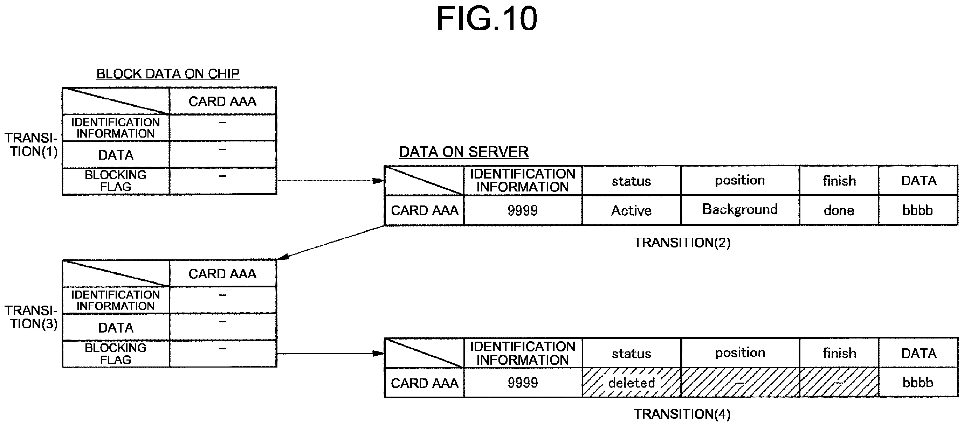

In the following, transitions of data in card deletion (only the server) processing according to the embodiment of the present disclosure are described with reference to FIG. 10. FIG. 10 is an explanatory diagram illustrating transitions of data at the time of card deletion (only the server) processing according to the embodiment of the present disclosure.

It is assumed that, when a card deletion (only the server) request is inputted from the user, there is a situation where card information of another card is recorded in the block data on the chip (transition (1)) and card information to be deleted is recorded in the data on the server 10 (transition (2)).

In this case, after succeeding in terminal authentication with the client terminal 20, the server 10 updates the "status" indicating the state of the card of the data on the server to "Deleted", clears the "position" and the "finish" (transition (4)), and ends the card deletion (only the server) processing. The block data on the chip are not updated, because they are card information of another card (transition (3)).

As describe above, transitions of data in card deletion (only the server) processing according to the embodiment of the present disclosure have been described with reference to FIG. 10. Next, transitions of data in card deletion processing according to the embodiment of the present disclosure are described.

### (3-4) Card deletion processing

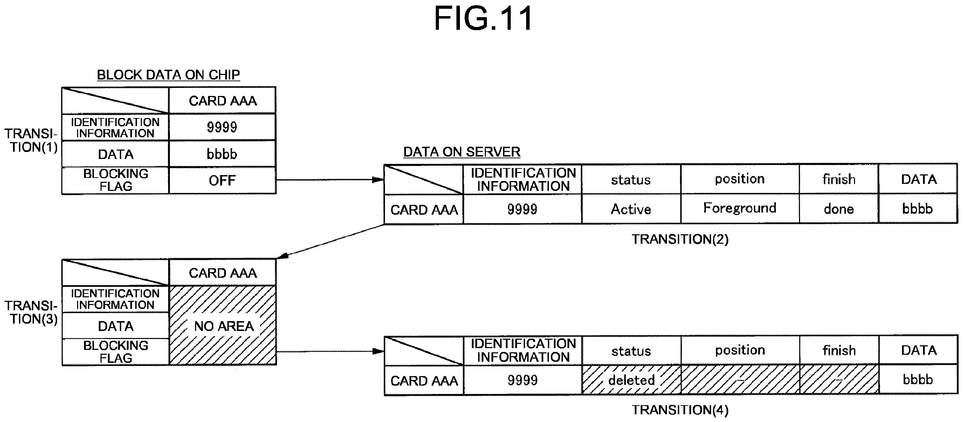

In the following, transitions of data in card deletion processing according to the embodiment of the present disclosure are described with reference to FIG. 11. FIG. 11 is an explanatory diagram illustrating transitions of data at the time of card deletion processing according to the embodiment of the present disclosure.

It is assumed that, when a card deletion request is inputted from the user, there is a situation where card information to be deleted is recorded in the block data on the chip (transition (1)) and card information to be deleted is recorded in the data on the server 10 (transition (2)).

In this case, after succeeding in terminal authentication with the client terminal 20, the server 10 deletes the area on the chip, and thereby deletes the card (transition (3)). After succeeding in the deletion of the area, the server 10 updates the "status" indicating the state of the card of the data on the server to "Deleted", clears the "position" and the "finish" (transition (4)), and ends the card deletion processing.

Hereinabove, transitions of data in card deletion processing according to the embodiment of the present disclosure are described with reference to FIG. 11. Next, transitions of data in card activation (issue) processing according to the embodiment of the present disclosure are described.

### (3-5) Card activation (issue) processing

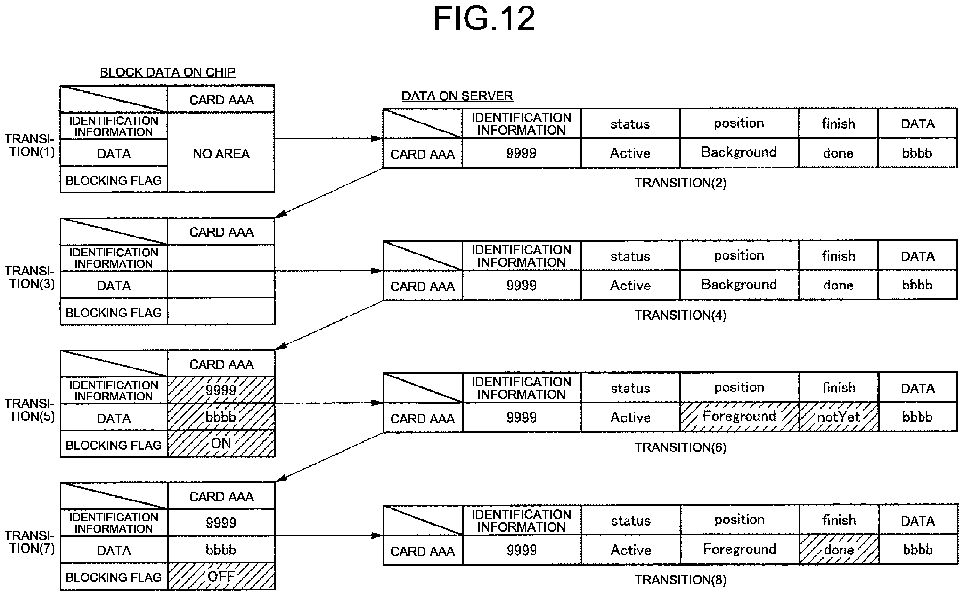

In the following, transitions of data in card activation (issue) processing according to the embodiment of the present disclosure are described with reference to FIG. 12. FIG. 12 is an explanatory diagram illustrating transitions of data at the time of card activation (issue) processing according to the embodiment of the present disclosure.

It is assumed that, when a card activation (issue) request is inputted from the user, there is no area in the block data on the chip (transition (1)) and there is a situation where card information to be subjected to activation (issue) processing is recorded in the data on the server (transition (2)). In this case, the server 10 causes the chip of the client terminal 20 to issue an area (transition (3)), and receives the result of area issue (transition (4)). Then, the server 10 performs terminal authentication with the client terminal 20.

After succeeding in the terminal authentication, the server 10 writes "identification information" (9999) and "data" (bbbb) on the block data on the chip, and sets the blocking flag to ON (transition (5)). After succeeding in the processing of updating to the state of transition (5), the server 10 updates the "position" indicating the state of the card of the data on the server to "Foreground" and the "finish" to "notYet" (transition (6)). After succeeding in the processing of updating to the state of transition (6), the server 10 updates the blocking flag of the block data on the chip to OFF (transition (7)). Then, after succeeding in the processing of updating to the state of transition (7), the server 10 updates the "finish" of the data on the server to "done" (transition (8)), and ends the card activation (issue) processing.

Hereinabove, transitions of data in card activation (issue) processing according to the embodiment of the present disclosure are described with reference to FIG. 12. Next, transitions of data in card activation (switching) processing according to the embodiment of the present disclosure are described.

### (3-6) Card activation (switching) processing

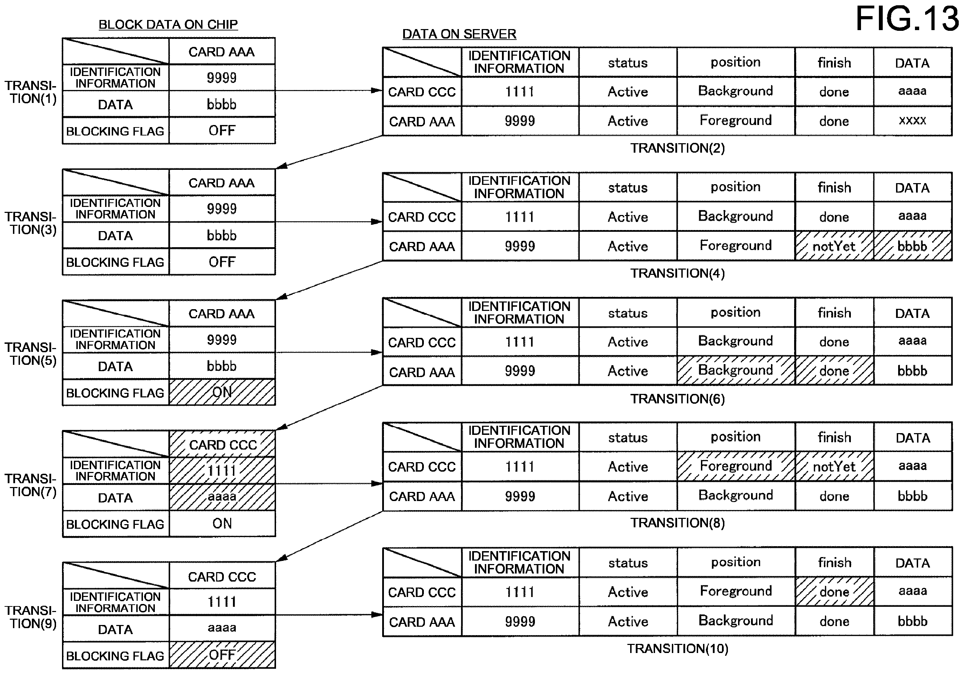

In the following, transitions of data in card activation (switching) processing according to the embodiment of the present disclosure are described with reference to FIG. 13. FIG. 13 is an explanatory diagram illustrating transitions of data at the time of card activation (switching) processing according to the embodiment of the present disclosure.

It is assumed that, when a card activation (switching) request to switch card AAA to card CCC is inputted from the user, there is a situation where card information of card AAA is recorded in the block data on the chip (transition (1)). Further, it is assumed that there is a situation where pieces of card information of card AAA and card CCC are recorded in the data on the server (transition (2)). In this case, the server 10 performs terminal authentication with the client terminal 20 and the reading of all data (transition (3)). After succeeding in the terminal authentication and the reading of all data, the server 10 writes "data" (bbbb) on the data of card AAA on the server and thereby achieves consistency with the newest data on the chip side, and updates the "finish" indicating the state of the card of card AAA to "notYet" (transition (4)).

After succeeding in the processing of updating to the state of transition (4), the server 10 updates the blocking flag of the block data on the chip to ON (transition (5)). After succeeding in the processing of updating to the state of transition (5), the server 10 updates the "position" indicating the state of the card of card AAA of the data on the server to "Background" and the "finish" to "done" (transition (6)). After succeeding in the processing of updating to the state of transition (6), the server 10 writes "identification information" (1111) of card CCC and "data" (aaaa) on the block data of card AAA on the chip (transition (7)).

After succeeding in the processing of updating to the state of transition (7), the server 10 updates the "position" indicating the state of the card CCC of the data on the server to "Foreground" and the "finish" to "notYet" (transition (8)). After succeeding in the processing of updating to the state of transition (8), the server 10 updates the blocking flag of the block data on the chip to OFF (transition (9)). Then, after succeeding in the processing of updating to the state of transition (9), the server 10 updates the "finish" indicating the state of the card of the card CCC of the data on the server to "done" (transition (10)), and ends the card activation (switching) processing.

Hereinabove, transitions of data in card activation (switching) processing according to the embodiment of the present disclosure are described with reference to FIG. 13. Next, transitions of data in card activation (recovery) processing according to the embodiment of the present disclosure are described.

### (3-7) Card activation (recovery) processing

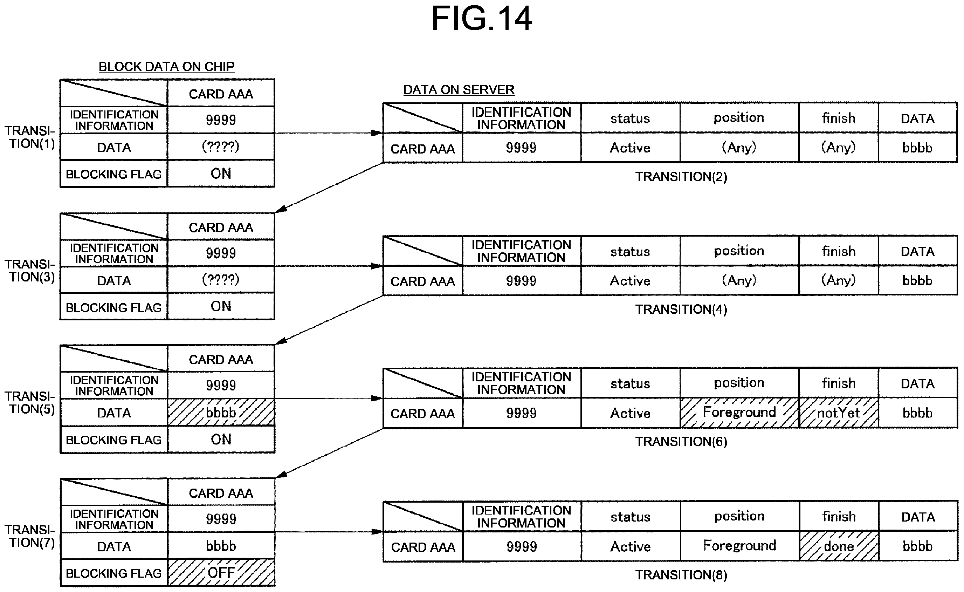

In the following, transitions of data in card activation (recovery) processing according to the embodiment of the present disclosure are described with reference to FIG. 14. FIG. 14 is an explanatory diagram illustrating transitions of data at the time of card activation (recovery) processing according to the embodiment of the present disclosure.

It is assumed that, when a manipulation request is inputted from the user, there is a situation where card information of a processing object is recorded in the block data on the chip and card information of a processing object is recorded also in the data on the server. However, it is assumed that, during the execution of processing regarding the manipulation request, the connection between the server 10 and the client terminal 20 is broken due to a communication failure or the like and that there is a state where inconsistency has occurred in data. For example, as illustrated in FIG. 14, the block data on the chip are in a state where inconsistency has occurred in data, and this state is expressed as (????) (transition (1)). Further, the data on the server are in a state where inconsistency has occurred in the "position" and the "finish", and this state is expressed as (Any) (transition (2)).

In this case, the server 10 performs terminal authentication with the client terminal 20 and the reading of all data (transition (3)). After succeeding in the terminal authentication and the reading of all data (transition (4)), the server 10 writes "data" (bbbb) on the block data on the chip, and thereby causes the data on the chip to be recovered (transition (5)). After succeeding in the processing of updating to the state of transition (5), the server 10 updates the "position" indicating the state of the card of the data on the server to "Foreground" and the "finish" to "notYet", and thereby causes the data on the server to be recovered (transition (6)). After succeeding in the processing of updating to the state of transition (6), the server 10 updates the blocking flag of the block data on the chip to OFF (transition (7)). After succeeding in the processing of updating to the state of transition (7), the server 10 updates the "finish" indicating the state of the card of the data on the server to "done" (transition (8)), and ends the card activation (recovery) processing.

Hereinabove, transitions of data in card activation (recovery) processing according to the embodiment of the present disclosure are described with reference to FIG. 14. Next, transitions of data in card deactivation processing according to the embodiment of the present disclosure are described.

### (3-8) Card deactivation processing

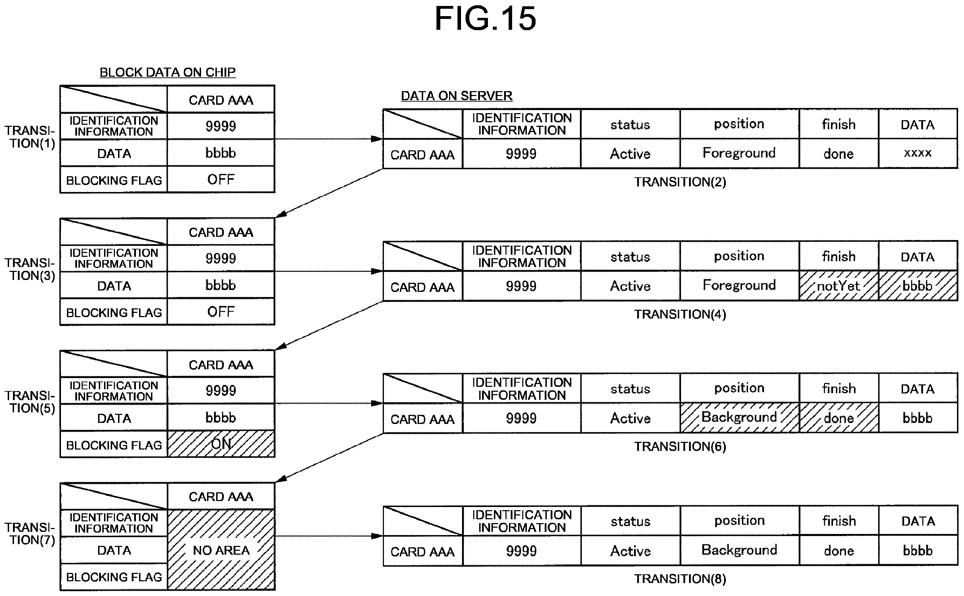

In the following, transitions of data in card deactivation processing according to the embodiment of the present disclosure are described with reference to FIG. 15. FIG. 15 is an explanatory diagram illustrating transitions of data at the time of card deactivation processing according to the embodiment of the present disclosure.

It is assumed that, when a manipulation request is inputted from the user, there is a situation where card information of a processing object is recorded in the block data on the chip (transition (1)) and card information of a processing object is recorded also in the data on the server (transition (2)). In this case, the server 10 performs terminal authentication with the client terminal 20 and the reading of all data (transition (3)). After succeeding in the terminal authentication and the reading of all data, the server 10 writes "data" (bbbb) on the data on the server and thereby achieves consistency with the newest data on the chip side, and updates the "finish" indicating the state of the card to "notYet" (transition (4)).

After succeeding in the processing of updating to the state of transition (4), the server 10 updates the blocking flag of the block data on the chip to ON (transition (5)). After succeeding in the processing of updating to the state of transition (5), the server 10 updates the "position" indicating the state of the card of the data on the server to "Background" and the "finish" to "done" (transition (6)). After succeeding in the processing of updating to the state of transition (6), the server 10 deletes the area of the block data on the chip (transition (7)). After succeeding in the processing of deleting the area, the server 10 does not particularly perform processing of updating data on the server (transition (8)), and ends the card deactivation processing.

Hereinabove, transitions of data in card deactivation processing according to the embodiment of the present disclosure are described with reference to FIG. 15. Next, the storage section 160 according to the embodiment of the present disclosure is described.

### <3.1.3. Storage section 160>

The storage section 160 has the function of recording information regarding card information. For example, the storage section 160 has, as tables that record information regarding card information, a card information table, an account information table, a card identification information position information table, and a card blocking flag position information table.

The card information table records, for example, an ID of an account associated with a card, card state information indicating the state of a card, block data information that holds business information in an IC service, card identification information, etc. Subordinately to the card state information, the "status" indicating the state of the card, the "position" indicating the retention site of the card, and the "finish" indicating the state of writing on the chip are recorded.

The account information table records pieces of account information of a plurality of users. The card identification information position information table records position information indicating what position in the block data the card identification information is recorded in. The card blocking flag position information table records position information indicating what position in the block data the blocking flag is recorded in.

The storage section 160 according to the embodiment of the present disclosure has tampering resistance. The number of storage sections 160 may be one or plural. In the case where there are a plurality of storage sections 160, it is sufficient that at least one storage section 160 among the plurality of storage sections 160 have tampering resistance. A lock is managed for the storage section 160 having tampering resistance. The lock according to the embodiment of the present disclosure is, for example, data used for the checking of an electronic signature, authentication in communication of an arbitrary communication system such as NFC (including authentication for accessing a region of a recording medium), processing related to arbitrary encoding or decoding, etc.

Hereinabove, a functional configuration example of the server 10 according to the embodiment of the present disclosure is described with reference to FIG. 4 to FIG. 15. Next, a hardware configuration example of the server 10 according to the embodiment of the present disclosure is described.

### <3.2. Hardware configuration example>

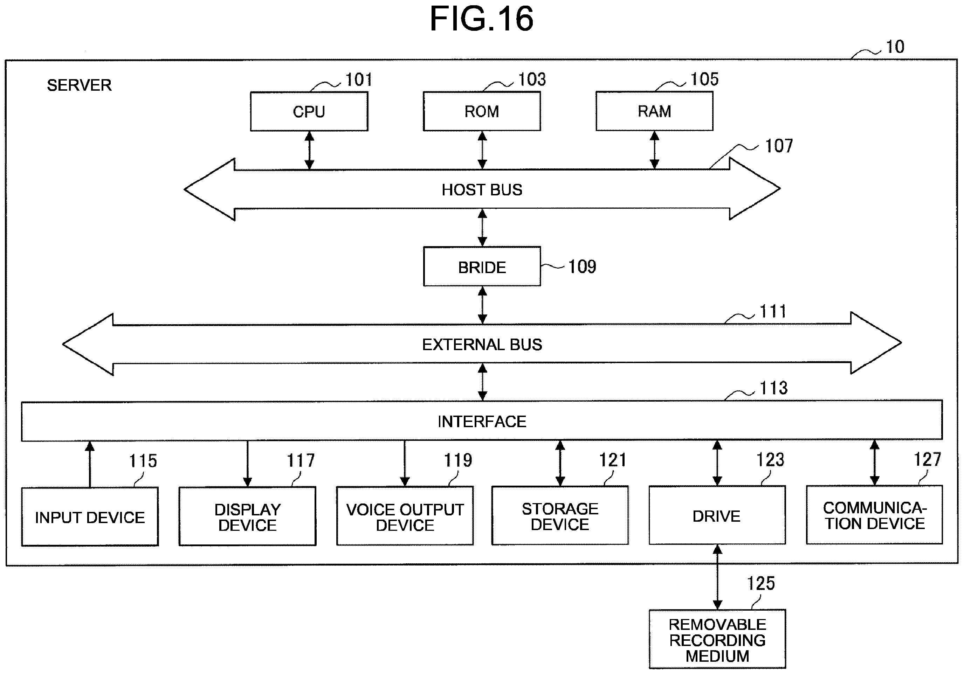

In the following, a hardware configuration example of the server 10 according to the embodiment of the present disclosure is described with reference to FIG. 16. FIG. 16 is a block diagram illustrating a hardware configuration example of the server 10 according to the embodiment of the present disclosure.

As illustrated in FIG. 16, the server 10 has, for example, a CPU 101, a ROM 103, a RAM 105, a host bus 107, a bridge 109, an external bus 111, and an interface 113. The server 10 further has an input device 115, a display device 117, a voice output device 119, a storage device 121, a drive 123, a removable recording medium 125, and a communication device 127. The hardware configuration illustrated here is an example, and some components may be omitted. The hardware configuration may further include components other than the components illustrated here.

### (1) CPU 101, ROM 103, and RAM 105

The CPU 101 functions as, for example, an arithmetic processing device or a control device, and controls the whole or part of the operation of each component on the basis of various programs recorded in the ROM 103, the RAM 105, the storage device 121, or the removable recording medium 125. The ROM 103 is a means for holding programs to be read by the CPU 101, data used for arithmetic operations, etc. The RAM 105 temporarily or lastingly holds, for example, programs to be read by the CPU 101, various parameters that change at the time of executing the programs, as appropriate, etc. These components are connected to each other by the host bus 107 formed of a CPU bus or the like. The CPU 101, the ROM 103, and the RAM 105 can achieve the function of the control section 140 described with reference to FIG. 4 by, for example, cooperation with software.

### (2) Host bus 107, bridge 109, external bus 111, and interface 113

The CPU 101, the ROM 103, and the RAM 105 are connected to each other via the host bus 107 that allows high-speed data sending, for example. On the other hand, the host bus 107 is connected to the external bus 111 having relatively low data sending speed via the bridge 109, for example. The external bus 111 is connected to various components via the interface 113.

### (3) Input device 115

For the input device 115, for example, a mouse, a keyboard, a touch panel, a button, a switch, a lever, and/or the like is used. Further, a remote controller capable of transmitting a control signal by using infrared rays or other radio waves may be used as the input device 115. The input device 115 includes a voice input device such as a microphone.

### (4) Display device 117 and voice output device 119

Examples of the display device 117 include display devices such as a cathode-ray tube (CRT) display device and a liquid crystal display (LCD) device. Further, the display device 117 includes display devices such as a projector apparatus, an organic light emitting diode (OLED) device, and a lamp. The voice output device 119 includes output devices such as a loudspeaker and a headphone.

### (5) Storage device 121

The storage device 121 is a device for holding various data. As the storage device 121, for example, a magnetic storage device such as a hard disk drive (HDD), a semiconductor storage device, an optical storage device, a magneto-optical storage device, or the like is used. The storage device 121 can achieve the function of the storage section 160 described with reference to FIG. 4, for example.

### (6) Drive 123

The drive 123 is, for example, a device that reads out information recorded in the removable recording medium 125 such as a magnetic disk, an optical disk, a magneto-optical disk, or a semiconductor memory, or writes information on the removable recording medium 125.

### (7) Removable recording medium 125

The removable recording medium 125 is, for example, a DVD medium, a Blu-ray (registered trademark) medium, an HD DVD medium, any of various semiconductor storage media, or the like. As a matter of course, the removable recording medium 125 may be an IC card equipped with a non-contact IC chip, an electronic device, or the like, for example.

### (8) Communication device 127

The communication device 127 is a communication device for connection to a network, and examples include a communication card for a wired or wireless LAN, Bluetooth (registered trademark), or wireless USB (WUSB), a router for optical communication, a router for asymmetric digital subscriber line (ADSL), modems for various communications, and the like.

Hereinabove, a hardware configuration example of the server 10 according to the embodiment of the present disclosure is described with reference to FIG. 16. Next, the client terminal 20 according to the embodiment of the present disclosure is described.

### <<4. Client terminal according to the embodiment of the present disclosure>>

### <4.1. Functional configuration example>

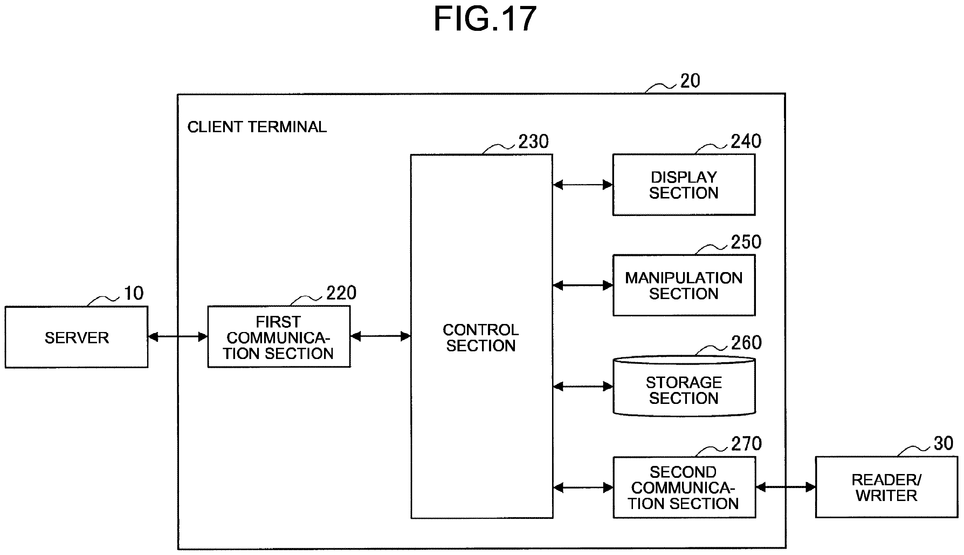

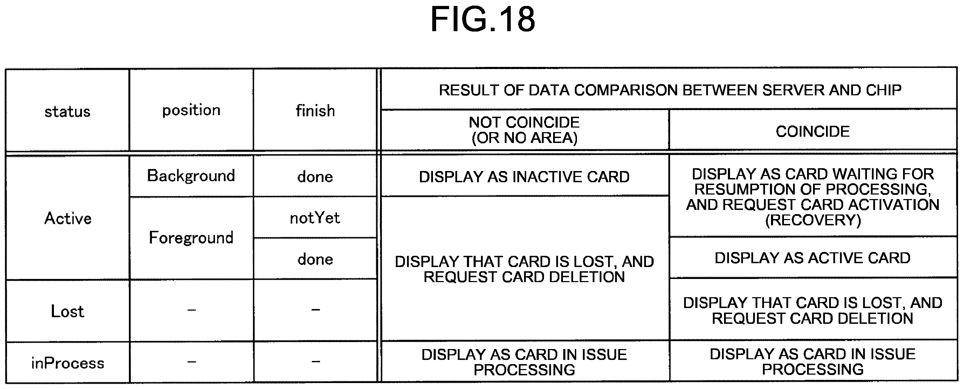

In the following, a functional configuration example of the client terminal 20 according to the embodiment of the disclosure is described with reference to FIG. 17 and FIG. 18. FIG. 17 is a block diagram illustrating a functional configuration example of the client terminal 20 according to the embodiment of the present disclosure.

As illustrated in FIG. 17, the client terminal 20 according to the embodiment of the present disclosure includes a first communication section 220, a control section 230, a display section 240, a manipulation section 250, a storage section 260, and a second communication section 270.

### <4.1.1. First communication section 220>

The first communication section 220 has the function of making communication with an external apparatus. For example, the first communication section 220 makes communication with the server 10. In communication with the server 10, the first communication section 220 outputs information received from the server 10 to the control section 230. Further, in communication with the server 10, the first communication section 220 transmits information inputted from the control section 230 to the server 10.

### <4.1.2. Control section 230>

The control section 230 has the function of controlling the whole of the client terminal 20. For example, the control section 230 controls communication processing in the first communication section 220 of the client terminal 20. Specifically, the control section 230 causes the first communication section 220 to transmit information outputted in accordance with processing executed by the control section 230 to the server 10. The control section 230 may cause the second communication section 270 to transmit information outputted in accordance with processing executed by the control section 230 to the reader/writer 30.

The control section 230 controls display processing in the display section 240 of the client terminal 20. For example, the control section 230 acquires the management state of card information associated with the account of the user managed by the server 10, executes processing decided on the basis of the result of comparison between the acquired management state and the recording state of the chip of the client terminal 20, and controls display processing. In display processing, the control section 230 causes a display device to display the result of comparison. The display device may be the display section 240 of the client terminal 20, or may agree with an external display device. For example, on the basis of the result of comparison, the control section 230 causes the display device to display an object indicating the state of the card information in the client terminal 20. By the object being displayed on the display device, the user can visually identify the state of the card easily.

Here, kinds of display processing in the client terminal 20 are described with reference to FIG. 18. FIG. 18 is an explanatory diagram illustrating kinds of display processing of the client terminal 20 according to the embodiment of the present disclosure.

As illustrated in FIG. 18, it is assumed that, for example, card information managed by the server 10 is in the valid state (the "statsu" is "Active", and the "position" is "Background") and the recording state in the chip and the management state in the server 10 do not coincide. In this case, the control section 230 determines that the service information recorded in the chip is in the invalid state. The control section 230 causes the display section 240 to display information indicating that the card information of the chip is in the invalid state and the card corresponding to the card information is an inactive card.

Further, it is assumed that card information managed by the client terminal 20 is in the valid state (the "statsu" is "Active", and the "position" is "Foreground") and the recording state and the management state do not coincide. In this case, the control section 230 determines that the card information recorded in the chip is in a lost state, and makes a request of the user or the server 10 to delete the card information. The control section 230 causes the display section 240 to display information indicating that the card information of the chip is in the lost state.

Further, it is assumed that card information managed by the client terminal 20 is in the lost state (the "statsu" is "Lost"). In this case, the control section 230 determines that the card information recorded in the chip is in a lost state, and makes a request of the user or the server 10 to delete the card information. The control section 230 causes the display section 240 to display information indicating that the card information of the chip is in the lost state.

Further, it is assumed that card information managed by the server 10 is in the invalid state (the "status" is "inProcess") and card information is not recorded in the chip. In this case, the control section 230 determines that the card information managed by the server 10 is under new creation. The control section 230 causes the display section 240 to display information indicating that the card information of the chip is under new creation.

Further, it is assumed that card information managed by the server 10 is in the valid state and in the newest state (the "statsu" is "Active", the "position" is "Background", and the "finish" is "done"), and the recording state of the chip and the management state of the server 10 coincide. In this case, the control section 230 determines that the card information is in a state of waiting for the resumption of processing, and makes a request of the user or the server 10 to resume the processing of the card information. The control section 230 causes the display section 240 to display information indicating that the card information of the chip is in a state of waiting for the resumption of processing.

Further, it is assumed that card information of the client terminal 20 is in the valid state, but it is not settled whether the card information of the client terminal 20 is in the newest state or whether the card information of the server 10 is in the newest state (the "statsu" is "Active", the "position" is "Foreground", and the "finish" is "notYet"). Further, it is assumed that the recording state and the management state of the card information coincide. In this case, the control section 230 determines that the card information of the server 10 is in a state of waiting for the resumption of processing, and makes a request of the user or the server 10 to resume the processing of the card information. The control section 230 causes the display section 240 to display information indicating that the card information of the chip is in a state of waiting for the resumption of processing.

Further, it is assumed that card information managed by the client terminal 20 is in the valid state and in the newest state (the "statsu" is "Active", the "position" is "Foreground", and the "finish" is "done"), and the recording state and the management state coincide. In this case, the control section 230 determines that the card information recorded in the chip is in the valid state. The control section 230 causes the display section 240 to display information indicating that the card information of the chip is in the valid state and the card corresponding to the card information is an active card.

Further, the control section 230 controls processing based on information inputted to the manipulation section 250 of the client terminal 20. For example, the control section 230 executes processing regarding card information recorded in the chip on the basis of a manipulation by the user inputted to the manipulation section 250.

Further, the control section 230 controls storage processing in the storage section 260 of the client terminal 20. For example, the control section 230 outputs information outputted by executing processing regarding card information recorded in the chip to the storage section 260, and causes the storage section 260 to store the information.

Further, the control section 230 controls communication processing in the second communication section 270 of the client terminal 20. For example, on the basis of an instruction by the user, the control section 230 causes the recording state of card information recorded in the chip to be transmitted to the server 10 managing card information.

### <4.1.3. Display section 240 and manipulation section 250>

The display section 240 has the function of displaying diverse display screens such as a home screen and a lock screen on a display panel under the control of the control section 230. As the display panel, for example, a liquid crystal display panel or an organic electro-luminescence (EL) display panel is used. The client terminal 20 includes, as the manipulation section 250, a manipulation key, a power switch, etc. The manipulation information of the manipulation key is sent to the control section 230.

The display section 240 of the client terminal 20 may function as the manipulation section 250 by using a touch panel for the display section 240. When a surface (a detection surface) of the display panel is touched by a body such as a finger or a pen, the touch panel detects the touched position. For example, the touch panel detects that a finger or a pen has come into contact with an area or the like where the display panel displays an image or the like. The touch panel may be configured in a state of being stacked on the display panel, or may be configured integrally with the display panel. The touch panel may be of a capacitance type, for example; in this case, the fact that the surface of the display panel has been touched by a finger or the like is detected from a change in capacitance.

The data of the touch position detected by the touch panel are sent to the control section 230. The control section 230 executes a running application on the basis of the touch position supplied. The touch position is indicated by, for example, a coordinate position on an X-axis (the horizontal axis) and a Y-axis (the vertical axis) that are orthogonal two axes. The number of coordinate positions detected by the touch panel is not limited to one. In the case where a plurality of points are touched simultaneously, the control section 230 makes control based on the plurality of points detected. When a wide area of the touch panel is touched simultaneously, the control section 230 detects the entire touched area.

### <4.1.4. Storage section 260>

The storage section 260 has the function of recording information regarding the client terminal 20. For example, the storage section 260 stores data such as data outputted in the processing of the control section 230, and various applications.

### <4.1.5. Second communication section 270>

The second communication section 270 has the function of making communication with an external apparatus. For example, the second communication section 270 makes communication with the reader/writer 30 by NFC. In communication with the reader/writer 30, the second communication section 270 outputs information received from the reader/writer 30 to the control section 230. Further, in communication with the reader/writer 30, the second communication section 270 transmits information inputted from the control section 230 to the reader/writer 30. As described above, the second communication section 270 may be, for example, a communication device adapted to a communication system other than NFC, such as wireless communication using IEEE 802.15.1.

Hereinabove, a functional configuration example of the client terminal 20 according to the embodiment of the present disclosure is described with reference to FIGS. 17 and 18. Next, a hardware configuration example of the client terminal 20 according to the embodiment of the present disclosure is described.

### <4.2. Hardware configuration example>

### <4.2.1. Hardware configuration example of client terminal 20>

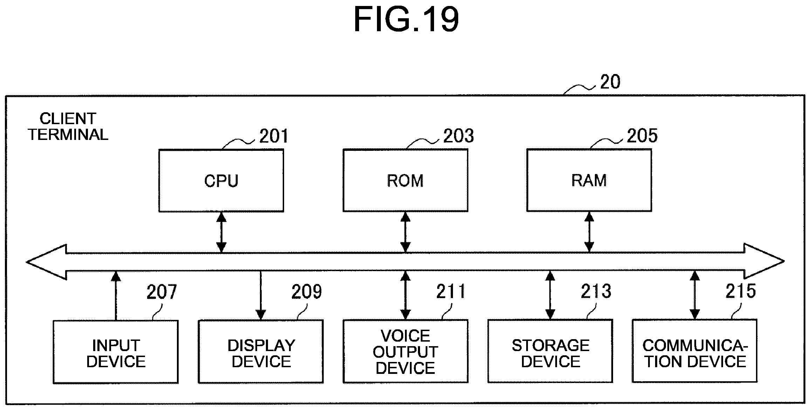

In the following, a hardware configuration example of the client terminal 20 according to the embodiment of the present disclosure is described with reference to FIG. 19. FIG. 19 is a block diagram illustrating a hardware configuration example of the client terminal 20 according to the embodiment of the present disclosure. As illustrated in FIG. 19, the client terminal 20 has, for example, a CPU 201, a ROM 203, a RAM 205, an input device 207, a display device 209, a voice output device 211, a storage device 213, and a communication device 215. The hardware configuration illustrated here is an example, and some components may be omitted. The hardware configuration may further include components other than the components illustrated here.

### (1) CPU 201, ROM 203, and RAM 205

The CPU 201 functions as, for example, an arithmetic processing device or a control device, and controls the whole or part of the operation of each component on the basis of various programs recorded in the ROM 203, the RAM 205, or the storage device 213. The ROM 203 is a means for holding programs to be read by the CPU 201, data used for arithmetic operations, etc. The RAM 205 temporarily or lastingly holds, for example, programs to be read by the CPU 201, various parameters that change at the time of executing the programs, as appropriate, etc. These components are connected to each other by the host bus formed of a CPU bus or the like. The CPU 201, the ROM 203, and the RAM 205 can achieve the function of the control section 230 described with reference to FIG. 17 by, for example, cooperation with software.

### (2) Input device 207

For the input device 207, for example, a mouse, a keyboard, a touch panel, a button, a switch, a lever, and/or the like is used. Further, a remote controller capable of transmitting a control signal by using infrared rays or other radio waves may be used as the input device 207. The input device 207 includes a voice input device such as a microphone. The input device 207 can achieve the function of the manipulation section 250 described with reference to FIG. 17, for example.

### (3) Display device 209 and voice output device 211

Examples of the display device 209 include display devices such as a cathode-ray tube (CRT) display device and a liquid crystal display (LCD) device. Further, the display device 209 includes display devices such as a projector apparatus, an organic light emitting diode (OLED) device, and a lamp. The voice output device 211 includes voice output devices such as a loudspeaker and a headphone. The display device 209 can achieve the function of the display section 240 described with reference to FIG. 17, for example.

### (4) Storage device 213

The storage device 213 is a device for holding various data. As the storage device 213, for example, a magnetic storage device such as a hard disk drive (HDD), a semiconductor storage device, an optical storage device, a magneto-optical storage device, or the like is used. The storage device 213 can achieve the function of the storage section 260 described with reference to FIG. 17, for example.

### (5) Communication device 215

The communication device 215 is a communication device for connection to a network, and examples include a communication card for a wired or wireless LAN, Bluetooth (registered trademark), or wireless USB (WUSB), a router for optical communication, a router for asymmetric digital subscriber line (ADSL), modems for various communications, and the like. The communication device 215 can achieve the function of the first communication section 220 described with reference to FIG. 17, for example.

Hereinabove, a hardware configuration example of the client terminal 20 according to the embodiment of the present disclosure is described with reference to FIG. 19.

### <4.2.2. Hardware configuration example of second communication section 270>

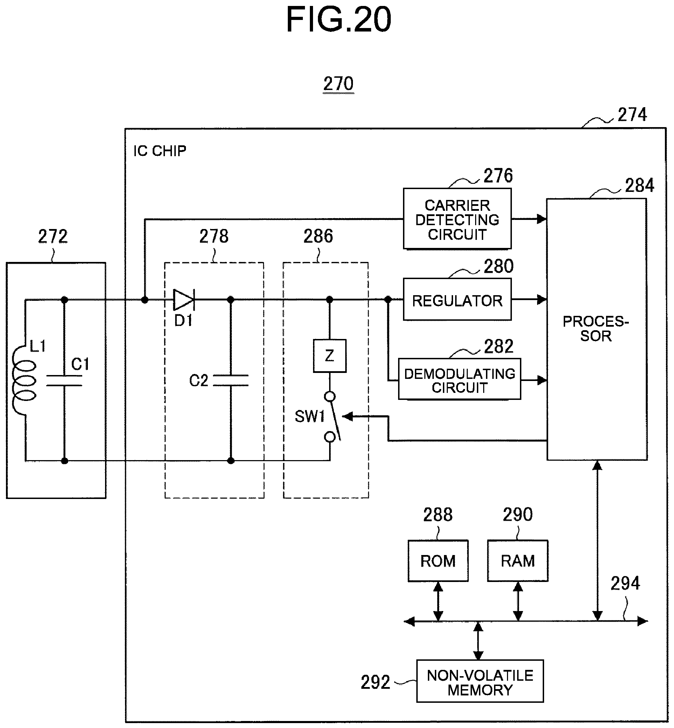

Next, a hardware configuration example of the second communication section 270 according to the embodiment of the present disclosure is described with reference to FIG. 20. FIG. 20 is a block diagram illustrating a hardware configuration example of the second communication section 270 according to the embodiment of the present disclosure. The second communication section 270 includes, for example, an antenna 272 and an IC chip 274. For the configuration of the IC chip 274 illustrated in FIG. 20, the second communication section 270 may not employ a form of an IC chip, for example.

The second communication section 270 having the hardware configuration illustrated in FIG. 20 is driven by a received voltage according to a carrier wave received by the antenna 272. The second communication section 270 may also be driven by, for example, electric power supplied from an internal power source such as a battery included in the second communication section 270, electric power supplied from an external power source connected, or the like.

### (1) Antenna 272

The antenna 272 is constituted by a resonance circuit including, for example, a coil (inductor) L1 having a predetermined inductance and a capacitor C1 having predetermined capacitance, and generates an inductive voltage through electromagnetic induction in response to the reception of the carrier wave. Further, the antenna 272 outputs a reception voltage obtained by resonating the inductive voltage at a predetermined resonance frequency. Here, the resonance frequency of the antenna 272 is set in accordance with a frequency of the carrier wave such as, for example, 13.56 MHz. The antenna 272 receives the carrier wave through the above configuration and transmits a response signal through load modulation performed in a load modulation circuit 286 of the IC chip 274.

### (2) IC chip 274

The IC chip 274 includes, for example, a carrier detecting circuit 276, a detecting circuit 278, a regulator 280, a demodulating circuit 282, a processor 284, and a load modulation circuit 286. Further, although not illustrated in FIG. 20, the IC chip 274 may further include, for example, a protection circuit (not illustrated) for preventing an overvoltage or an overcurrent from being applied to the processor 284. Here, for example, a clamp circuit or the like constituted by a diode or the like can be used as the protection circuit (not illustrated).

Further, the IC chip 274 includes, for example, a read only memory (ROM) 288, a random access memory (RAM) 290, and a non-volatile memory 292. For example, the processor 284, the ROM 288, the RAM 290, and the non-volatile memory 292 are connected via a bus 294 as a data transmission path.

### (2-1) ROM 288

The ROM 288 stores a program, control data such as calculation parameters, and the like which are used by the processor 284.

### (2-2) RAM 290

The RAM 290 temporarily stores a program executed by the processor 284, a calculation result, an execution state, or the like.

### (2-3) Non-volatile memory 292

The non-volatile memory 292 stores, for example, various data such as data related to information processing according to the embodiment of the present disclosure, such as service information and setting information, data corresponding to various services, and various application programs.

Here, examples of the non-volatile memory 292 include an electrically erasable and programmable read only memory (EEPROM), a flash memory, and the like.

The non-volatile memory 292 has tampering resistance, for example. The security of data is ensured in the second communication section 270 by the data being stored in a secure recording medium having tampering resistance, such as the non-volatile memory 292. For example, in the non-volatile memory 292 having tampering resistance, a blocking flag, card identification information, and business information are recorded as block data of each card.

### (2-4) Carrier detecting circuit 276

The carrier detecting circuit 276 generates, for example, a rectangular detection signal on the basis of a reception voltage transferred from the antenna 272, and transmits the detection signal to the processor 284. Further, for example, the processor 284 uses the transferred detection signal as a process clock for data processing. Here, since the detection signal is a signal based on the reception voltage transferred from the antenna 272, the detection signal is synchronized with a frequency of the carrier wave transmitted from an external device such as the reader/writer 30. Therefore, since the carrier detecting circuit 276 is installed, the IC chip 274 can perform a process with an external device such as the reader/writer 30 in synchronization with an external device.

### (2-5) Detecting circuit 278

The detecting circuit 278 rectifies the reception voltage output from the antenna 272. Here, the detecting circuit 278 includes, for example, a diode D1 and a capacitor C2.

### (2-6) Regulator 280

The regulator 280 changes a received voltage into a smooth, constant voltage, and outputs a drive voltage to the processor 284. Here, the regulator 280 uses a direct current component of the received voltage as the drive voltage. As described above, for example, in the case where the second communication section 270 includes an internal power source such as a battery, the second communication section 270 may be driven by electric power supplied from the internal power source. In the case where an external power source is connected to the second communication section 270, the second communication section 270 may be driven by electric power supplied from the external power source.

### (2-7) Demodulating circuit 282

The demodulating circuit 282 demodulates the carrier wave signal included in the carrier wave on the basis of the reception voltage and outputs data (for example, a binary data signal of a high level and a low level) corresponding to the carrier wave signal. Here, the demodulating circuit 282 outputs an AC component of the reception voltage as data.

### (2-8) Processor 284

The processor 284 is driven using the drive voltage output from the regulator 280 as electric power and processes the data demodulated in the demodulating circuit 282.

Further, the processor 284 generates selectively a control signal for controlling the load modulation related to a response to an external device such as the reader/writer 30 in accordance with a processing result. Then, the processor 284 outputs selectively the control signal to the load modulation circuit 286.

The processing in the processor 284 is not limited to processing of data demodulated in the demodulating circuit 282. For example, the processor 284 may perform processing of arbitrary data.

The processor 284 is composed of, for example, one or two or more processors each formed of an arithmetic circuit such as a micro processing unit (MPU), various processing circuits, or the like.

### (2-9) Load modulation circuit 286

The load modulation circuit 286 includes, for example, a load Z and a switch SW1, and selectively connects (activates) the load Z in accordance with the control signal transferred from the processor 284 and performs the load modulation. Here, the load Z includes, for example, a resistor having a predetermined resistance value. Further, the switch SW1 is constituted by, for example, a p-channel metal oxide semiconductor field effect transistor (MOSFET) or an n-channel MOSFET.

With the above configuration, the IC chip 274 processes the carrier wave signal received by the antenna 272 and causes the antenna 272 to transmit the response signal through the load modulation. Further, with the configuration above, for example, the IC chip 274 may perform processing of arbitrary data.

The hardware configuration of the second communication section 270 according to the embodiment of the present disclosure is not limited to the configuration illustrated in FIG. 20.

Hereinabove, a hardware configuration example of the second communication section 270 according to the embodiment of the present disclosure is described with reference to FIG. 20. Next, the reader/writer 30 according to the embodiment of the present disclosure is described.

### <<S. Reader/writer according to the embodiment of the present disclosure >>

### <5.1. Hardware configuration example>

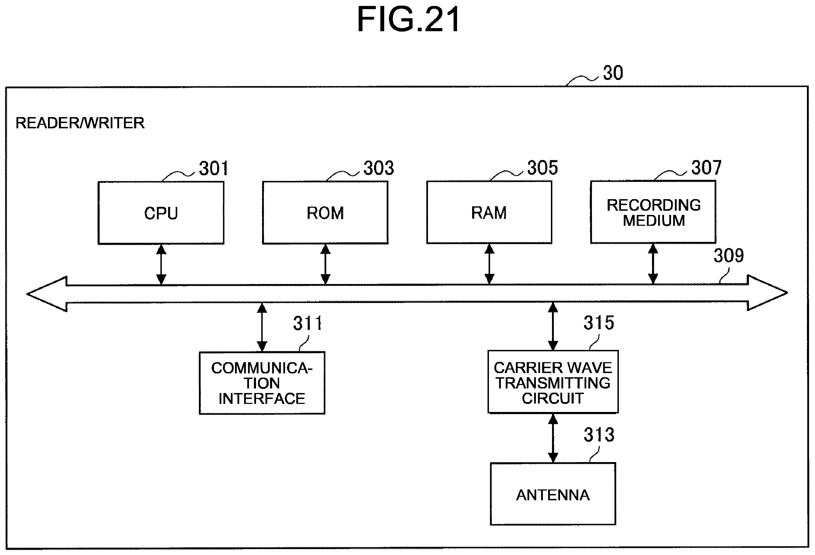

In the following, a hardware configuration example of the reader/writer 30 according to the embodiment of the present disclosure is described with reference to FIG. 21. FIG. 21 is a block diagram illustrating a hardware configuration example of the reader/writer 30 according to the embodiment of the present disclosure. Note that a hardware configuration of the reader/writer 30 according to the embodiment of the present disclosure is not limited to the configuration illustrated in FIG. 21.

The reader/writer 30 includes, for example, an MPU 301, a ROM 303, a RAM 305, a recording medium 307, a communication interface 311, an antenna 313, and a carrier wave transmitting circuit 315. Further, for example, the respective components of the reader/writer 30 are connected with one another via a bus 309 serving as a data transmission path. Further, the reader/writer 30 is driven by, for example, electric power supplied from an internal power source such as a battery included in the reader/writer 30, electric power supplied from a connected external power source, or the like.

### (1) MPU 301

The MPU 301 is constituted by one or two or more processors constituted by a calculating circuit such as, for example, an MPU, various kinds of processing circuits, or the like, and functions as a control section (not illustrated) that controls the reader/writer 30 in general.

### (2) ROM 303

The ROM 303 stores a program, control data such as calculation parameters, and the like which are used by the MPU 301.

### (3) RAM 305

The RAM 305 temporarily stores, for example, a program executed by the MPU 301.

### (4) Recording medium 307

The recording medium 307 functions as a storage unit (not illustrated) and stores various types of data such as, for example, various kinds of applications. Here, examples of the recording medium 307 include a magnetic recording medium such as a hard disk and a non-volatile memory such as a flash memory. Further, the recording medium 307 may be detachable from the reader/writer 30.

### (5) Communication interface 311

The communication interface 311 is a communication device which performs communication of one communication scheme supported by the reader/writer 30 and functions as a first communication section (not illustrated) that performs communication with an external device such as the server in a wireless or wired manner via a network (or directly). Here, for example, a communication antenna and an RF circuit (wireless communication), an IEEE 802.15.1 port and a transmitting/receiving circuit (wireless communication), an IEEE 802.11 port and a transmitting/receiving circuit (wireless communication), a LAN terminal and a transmitting/receiving circuit (wired communication), or the like can be used as the communication interface 311. Further, the communication interface 311 may be an arbitrary configuration corresponding to the network according to the present embodiment.

The antenna 313 and the carrier wave transmitting circuit 315 are a communication device that performs communication of other communication schemes supported in the reader/writer 30, and function as a second communication section (not illustrated) that performs communication with an external device such as the client terminal 20 in a wireless or wired manner.

### (6) Antenna 313

The antenna 313 is constituted by, for example, a resonance circuit including a coil having a predetermined inductance serving as a transmitting/receiving antenna and a capacitor having predetermined capacitance and a demodulating circuit. Further, the antenna 313 receives carrier waves of a predetermined frequency such as, for example, 13.56 MHz, and demodulates data or the like transmitted through the load modulation or the like from an external device such as the client terminal 20. Further, for example, in a case in which the carrier wave transmitting circuit 315 includes a demodulating circuit, the antenna 313 may be constituted by a resonance circuit.

### (7) Carrier wave transmitting circuit 315

The carrier wave transmitting circuit 315 includes, for example, a modulating circuit that performs modulation such as amplitude shift keying (ASK) and an amplifying circuit that amplifies an output of the modulating circuit, and causes carrier waves carrying the carrier wave signal from the transmitting/receiving antenna of the antenna 313 to be transmitted. Further, the carrier wave transmitting circuit 315 may include a demodulating circuit that demodulates a signal received by the antenna 313, for example. For example, the demodulating circuit performs envelope detection of an amplitude change in a voltage between the modulating circuit (or the amplifying circuit) and the resonance circuit of the antenna 313, binarizes the detected signal, and demodulates the signal received by the antenna 313. Further, the demodulating circuit can demodulate the signal received by the antenna 313, for example, by using a phase change in the voltage between the modulating circuit (or the amplifying circuit) and the resonance circuit of the antenna 313.

Since the carrier wave transmitting circuit 315 is installed, the reader/writer 30 has an initiator function in NFC and undertakes a so-called reader/writer. Here, various signals such as, for example, a polling signal and a signal indicating various kinds of commands such as a write command can be used as the carrier wave signal transmitted from the antenna 313 by the carrier wave transmitting circuit 315. Examples of the writing command according to the embodiment of the present disclosure include data including a data writing order and various parameters indicating the region for writing, etc. Further, the writing command may include data to be written.

Further, for example, the carrier wave transmitting circuit 315 controls the transmission of the carrier wave by the MPU 301.

For example, the reader/writer 30 may not include the communication interface 311 in a case in which communication with an external device is performed via an external communication device having a function similar to that of the communication interface 311.

The reader/writer 30 may not include the antenna 313 or the carrier wave transmitting circuit 315 in the case of making communication with an external apparatus via an external communication device having similar functions to the antenna 313 and the carrier wave transmitting circuit 315.

Further, the reader/writer 30 may not include the antenna 313 and the carrier wave transmitting circuit 315 in a case in which communication with an external device is performed in accordance with a communication scheme other than NFC such as wireless communication using IEEE 802.15.1. In the case of the above example, the reader/writer 30 performs communication with an external device through a communication device that supports a communication scheme other than NFC or an external communication device that supports a communication scheme other than NFC.

Further, the reader/writer 30 may have a configuration in which, for example, the recording medium 307 is not included.

Further, for example, the configuration illustrated in FIG. 21 may be realized by one or two or more integrated circuits (ICs).

Hereinabove, a hardware configuration example of the reader/writer 30 according to the embodiment of the present disclosure is described with reference to FIG. 21. Next, operation examples of the information processing system according to the embodiment of the present disclosure are described.

### <<6. Operation examples>>

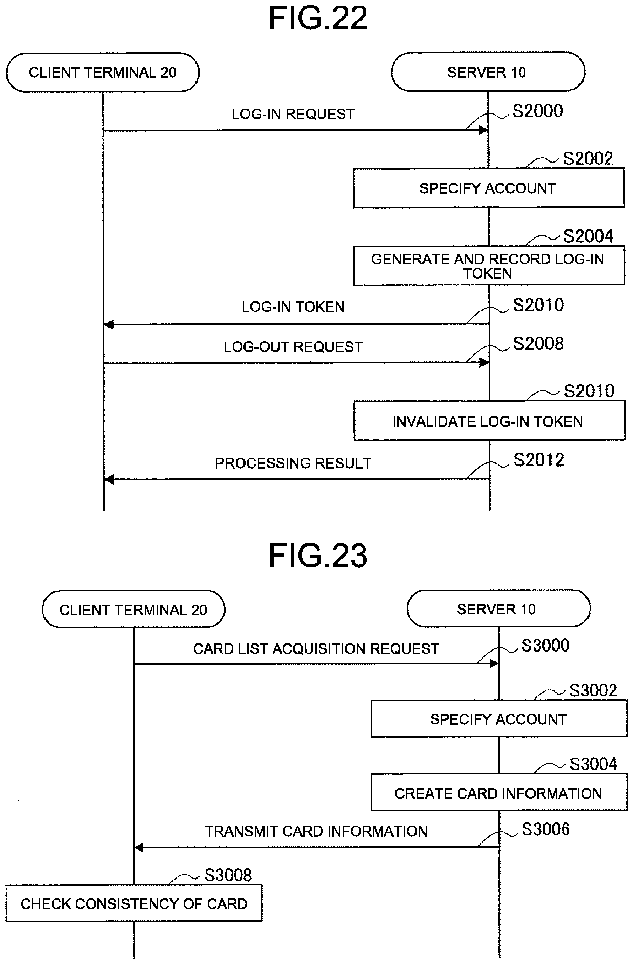

In the following, operation examples of the server 10 and the client terminal 20 according to the embodiment of the present disclosure are described with reference to FIG. 22 to FIG. 29.

### <6.1. Log-in/log-out processing>

First, an operation example of the server 10 and the client terminal 20 in log-in/log-out processing according to the embodiment of the present disclosure is described with reference to FIG. 22. FIG. 22 is a sequence diagram illustrating an operation example at the time of log-out/log-in processing according to the embodiment of the present disclosure.

As illustrated in FIG. 22, when performing log-in, first, the client terminal 20 transmits a log-in request to the server 10 (step S2000). The server 10 that has received the log-in request specifies the account on the basis of the identification information of the client terminal 20 (step S2002). After the specification of the account, the server 10 generates and records a log-in token (step S2004). Then, the server 10 transmits the log-in token to the client terminal 20 (step S2006), and ends the log-in processing.

When performing log-out, first, the client terminal 20 transmits a log-out request to the server 10 (step S2008). The server 10 that has received the log-out request invalidates the log-in token generated during the log-in processing (step S2010). After the invalidation of the log-in token, the server 10 transmits the result of log-out processing to the client terminal 20 (step S2012), and ends the processing.

### <6.2. Card list acquisition processing>

Next, an operation example of the server 10 and the client terminal 20 in card list acquisition processing according to the embodiment of the present disclosure is described with reference to FIG. 23. FIG. 23 is a sequence diagram illustrating an operation example at the time of card list acquisition processing according to the embodiment of the present disclosure. It is assumed that log-in processing by the client terminal 20 is already executed at the time of the start of the present processing.

As illustrated in FIG. 23, when acquiring a card list, first, the client terminal 20 transmits a card list acquisition request including a log-in token to the server 10 (step S3000). The server 10 that has received the card list acquisition request specifies the account on the basis of the log-in token (step S3002). After the specification of the account, the server 10 searches for an account ID coinciding with the specified account ID from among the account IDs managed on the card information table, and specifies card information corresponding to the account ID coinciding (step S3004). Then, the server 10 transmits the card information to the client terminal 20 (step S3006). After the reception of the card information, the client terminal 20 checks the consistency of the card information (step S3008), and ends the card list acquisition processing.

### <6.3. Card issue (only the server) processing>

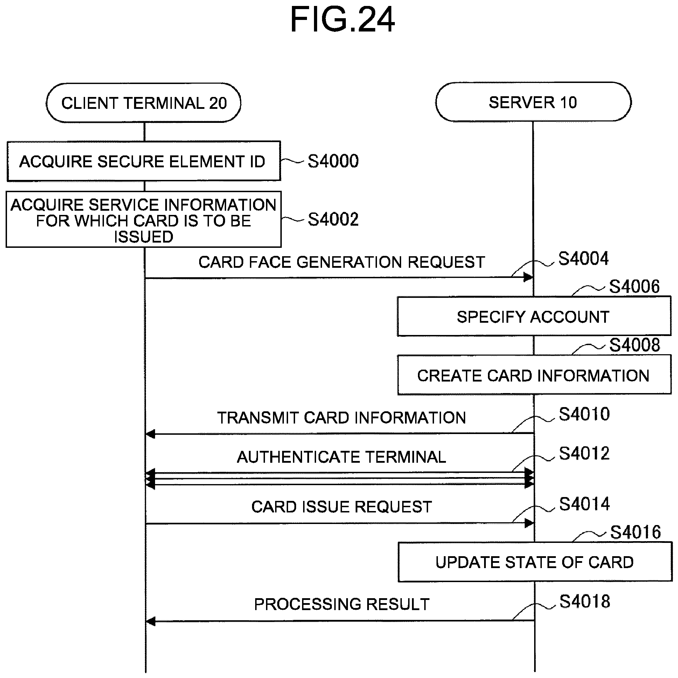

Next, an operation example of the server 10 and the client terminal 20 in card issue (only the server) processing according to the embodiment of the present disclosure is described with reference to FIG. 24. FIG. 24 is a sequence diagram illustrating an operation example at the time of card issue (only the server) processing according to the embodiment of the present disclosure. It is assumed that log-in processing by the client terminal 20 is already executed at the time of the start of the present processing.

As illustrated in FIG. 24, when issuing a card only to the server, first, the client terminal 20 acquires a secure element ID (step S4000). Here, the secure element ID is identification information for specifying the secure element. After the acquisition of the secure element ID, the client terminal 20 reads, from data on the chip corresponding to the secure element ID, service information for which a card is to be issued (step S4002). After the reading of the service information, the client terminal 20 transmits a card face generation request including a log-in token, the secure element ID, and the result of reading (the recording state) to the server 10 (step S4004).

After the reception of the card face generation request, the server 10 specifies the account on the basis of the log-in token (step S4006). After the specification of the account, the server 10 creates card information (step S4008), and transmits the card information (including a card ID) and an access token to the client terminal 20 (step S4010). After the reception of the card information, etc., the client terminal 20 performs terminal authentication with the server 10 (step S4012). After the terminal authentication, the client terminal 20 transmits a card issue request including the access token and the result of terminal authentication to the server 10 (step S4014). After receiving the card issue request, the server 10 updates the state of the card (step S4016). After the processing of updating the state of the card, the server 10 transmits the result of the processing to the client terminal 20 (step S4018), and ends the card issue (only the server) processing.

### <6.4. Card issue processing>

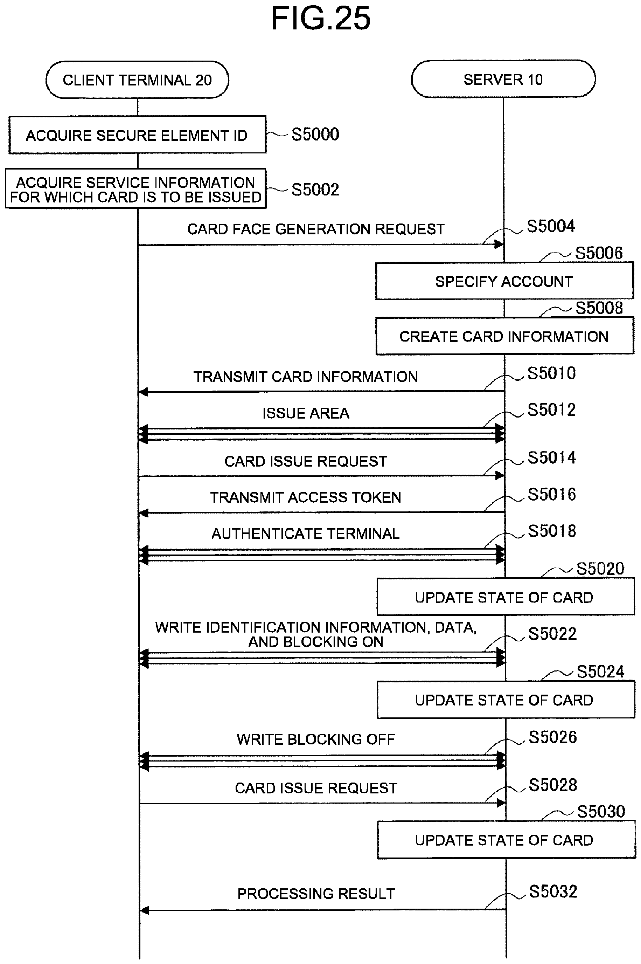

Next, an operation example of the server 10 and the client terminal 20 in card issue processing according to the embodiment of the present disclosure is described with reference to FIG. 25. FIG. 25 is a sequence diagram illustrating an operation example at the time of card issue processing according to the embodiment of the present disclosure. It is assumed that log-in processing by the client terminal 20 is already executed at the time of the start of the present processing.

As illustrated in FIG. 25, when issuing a card, first, the client terminal 20 acquires a secure element ID (step S5000). After the acquisition of the secure element ID, the client terminal 20 reads, from data on the chip corresponding to the secure element ID, service information for which a card is to be issued (step S5002). After the reading of the service information, the client terminal 20 transmits a card face generation request including a log-in token, the secure element ID, and the result of reading (the recording state) to the server 10 (step S5004).

After the reception of the card face generation request, the server 10 specifies the account on the basis of the log-in token (step S5006). After the specification of the account, the server 10 creates card information (step S5008), and transmits the card information (including a card ID) and an access token to the client terminal 20 (step S5010). After the transmission of the card information, etc., the server 10 causes the client terminal 20 to issue an area for storing the card information (step S5012). After the issue of the area, the client terminal 20 transmits a card issue request including the access token and the result of area issue (step S5014). On receiving the card issue request, the server 10 transmits the access token to the client terminal 20 (step S5016); when the client terminal 20 receives the access token, the server 10 and the client terminal 20 perform terminal authentication with each other (step S5018).

After the terminal authentication, the server 10 updates the state of the card (step S5020). After the updating of the state of the card, the server 10 writes the created card information (identification information and data) in the area issued on the chip of the client terminal 20, and sets the blocking flag to ON to lead to the inactive state (step S5022). After writing the card information on the chip, the server 10 updates the state of the card (step S5024). After updating the state of the card, the server 10 sets the blocking flag of the client terminal 20 to OFF to lead to the active state (step S5026). After the processing of switching the blocking flag, the client terminal 20 transmits a card issue request including the access token and the result of switching processing to the server 10 (step S5028). After receiving the card issue request, the server 10 updates the state of the card (step S5030). After the processing of updating the state of the card, the server 10 transmits the result of the processing to the client terminal 20, and ends the card issue processing (step S5032).

### <6.5. Card deletion (only the server) processing>

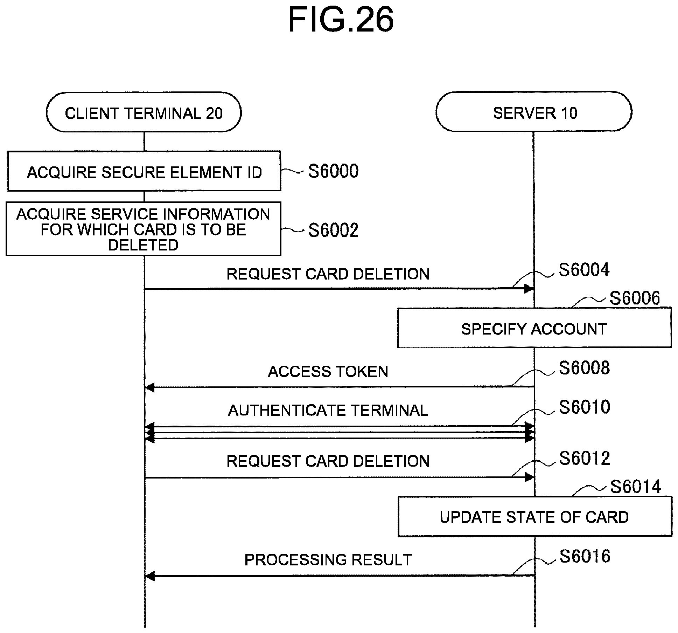

Next, an operation example of the server 10 and the client terminal 20 in card deletion (only the server) processing according to the embodiment of the present disclosure is described with reference to FIG. 26. FIG. 26 is a sequence diagram illustrating an operation example at the time of card deletion (only the server) processing according to the embodiment of the present disclosure. It is assumed that log-in processing by the client terminal 20 is already executed at the time of the start of the present processing.

As illustrated in FIG. 26, first, the client terminal 20 acquires a secure element ID (step S6000). After the acquisition of the secure element ID, the client terminal 20 reads, from data on the chip corresponding to the secure element ID, service information for which a card is to be deleted (step S6002). After the reading of the service information, the client terminal 20 transmits a card deletion request including a log-in token, the secure element ID, and the result of reading (the recording state) to the server 10 (step S6004).

After the reception of the card deletion request, the server 10 specifies the account on the basis of the log-in token (step S6006). After the specification of the account, the server 10 transmits an access token to the client terminal 20 (step S6008); when the client terminal 20 receives the access token, the server 10 and the client terminal 20 perform terminal authentication with each other (step S6010). After the terminal authentication, the client terminal 20 transmits a card deletion request including the access token and the result of terminal authentication to the server 10 (step S6012). After receiving the card deletion request, the server 10 updates the state of the card (step S6014). After the processing of updating the state of the card, the server 10 transmits the result of the processing to the client terminal 20 (step S6016), and ends the card deletion (only the server) processing.

### <6.6. Card deletion processing>

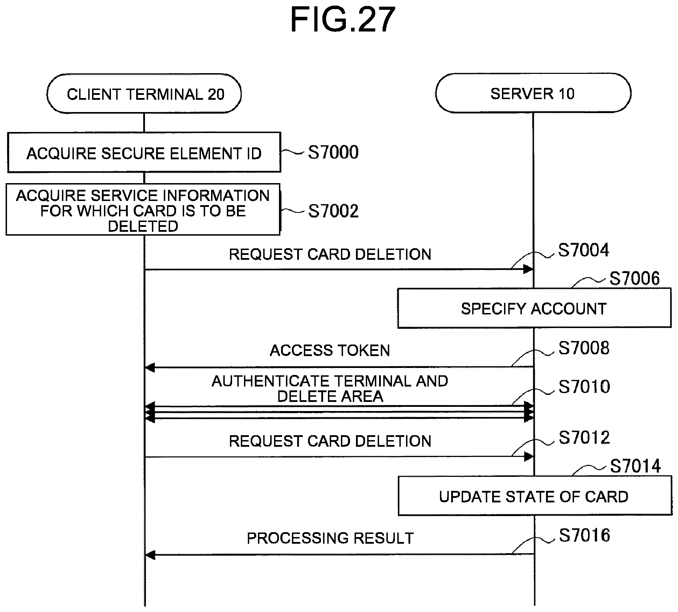

Next, an operation example of the server 10 and the client terminal 20 in card deletion processing according to the embodiment of the present disclosure is described with reference to FIG. 27. FIG. 27 is a sequence diagram illustrating an operation example at the time of card deletion processing according to the embodiment of the present disclosure. It is assumed that log-in processing by the client terminal 20 is already executed at the time of the start of the present processing.

As illustrated in FIG. 27, first, the client terminal 20 acquires a secure element ID (step S7000). After the acquisition of the secure element ID, the client terminal 20 reads, from data on the chip corresponding to the secure element ID, service information for which a card is to be deleted (step S7002). After the reading of the service information, the client terminal 20 transmits a card deletion request including a log-in token, the secure element ID, and the result of reading (the recording state) to the server 10 (step S7004).

After the reception of the card deletion request, the server 10 specifies the account on the basis of the log-in token (step S7006). After the specification of the account, the server 10 transmits an access token to the client terminal 20 (step S7008); when the client terminal 20 receives the access token, the server 10 performs terminal authentication with the client terminal 20, and the processing of deleting the area (step S7010). After the terminal authentication and the processing of deleting the area, the client terminal 20 transmits a card deletion request including the access token, the result of terminal authentication, and the result of the processing of deleting the area to the server 10 (step S7012). After receiving the card deletion request, the server 10 updates the state of the card (step S7014). After the processing of updating the state of the card, the server 10 transmits the result of the processing to the client terminal 20 (step S7016), and ends the card deletion processing.

### <6.7. Card activation (switching) processing >

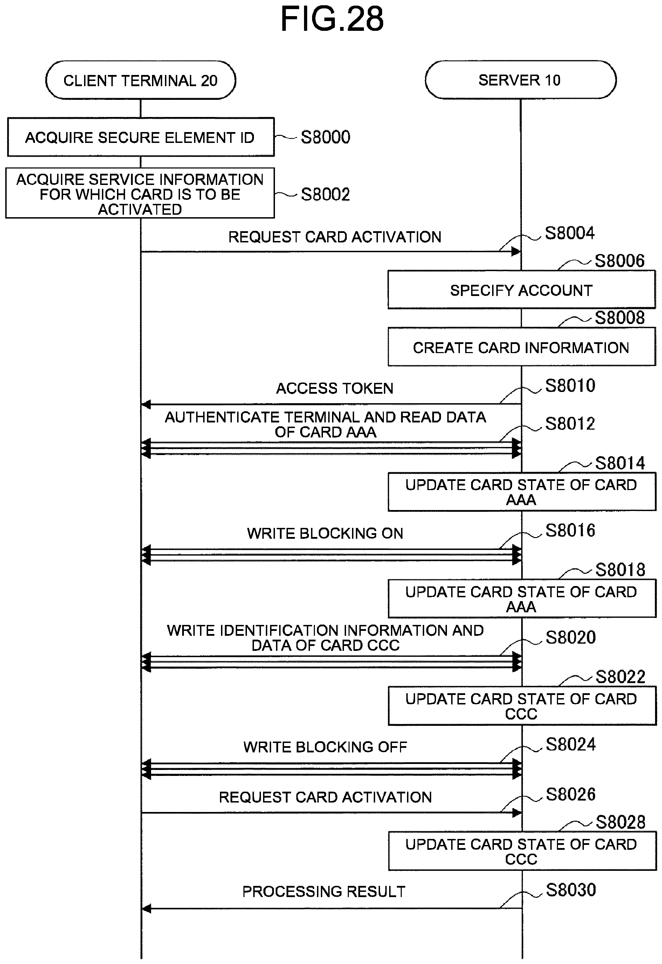

Next, an operation example of the server 10 and the client terminal 20 in card activation (switching) processing according to the embodiment of the present disclosure is described with reference to FIG. 28. FIG. 28 is a sequence diagram illustrating an operation example at the time of card activation (switching) processing according to the embodiment of the present disclosure. It is assumed that log-in processing by the client terminal 20 is already executed at the time of the start of the present processing. Further, in the following, an example in a case where the card AAA and the card CCC can be switched is described.

As illustrated in FIG. 28, first, the client terminal 20 acquires a secure element ID (step S8000). After the acquisition of the secure element ID, the client terminal 20 reads, from data on the chip corresponding to the secure element ID, service information for which a card is to be activated (step S8002). After the reading of the service information, the client terminal 20 transmits a card activation request including a log-in token, the secure element ID, and the result of reading (the recording state) to the server 10 (step S8004).

After the reception of the card activation request, the server 10 specifies the account on the basis of the log-in token (step S8006). After the specification of the account, the server 10 creates card information (step S8008), and transmits an access token to the client terminal 20 (step S8010). On receiving the access token, the client terminal 20 performs terminal authentication with the server 10, and reads card information (all data) of card AAA (step S8012). After the terminal authentication and the reading of card information, the server 10 updates the state of the card of card AAA (step S8014). After the updating of the state of the card, the server 10 sets the blocking flag of the card information of the chip of the client terminal 20 to ON to lead to the inactive state (step S8016). After the updating of the blocking flag of the chip, the server 10 updates the state of the card of card AAA (step S8018).

After updating the state of the card, the server 10 writes the card identification information and data of card CCC on the card identification information and data of card AAA, and performs updating (step S8020). After the updating of the card information of the chip, the server 10 updates the state of the card of card CCC (step S8022). After the updating of the state of the card, the server 10 sets the blocking flag of the card information of the chip of the client terminal 20 to OFF to lead to the active state (step S8024). After the updating of the blocking flag of the chip, the client terminal 20 transmits a card activation request including the access token and the result of updating the blocking flag to the server 10 (step S8026). After the reception of the card activation request, the server 10 updates the state of the card of card CCC (step S8028). After the processing of updating the state of the card, the server 10 transmits the result of the processing to the client terminal 20 (step S8030), and ends the card activation (switching) processing.

### <6.8. Card deactivation processing>

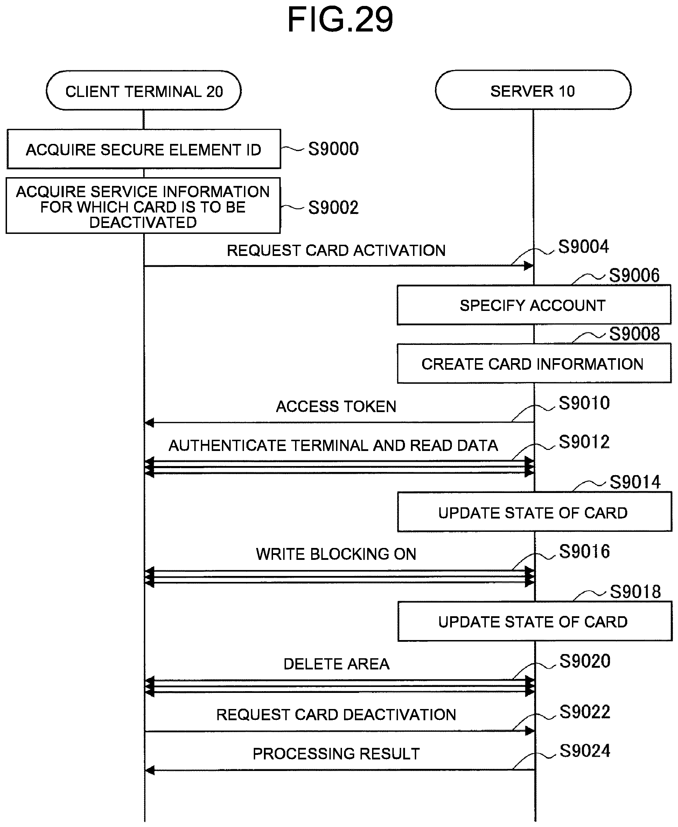

Next, an operation example of the server 10 and the client terminal 20 at the time of card deactivation processing according to the embodiment of the present disclosure is described with reference to FIG. 29. FIG. 29 is a sequence diagram illustrating an operation example at the time of card deactivation processing according to the embodiment of the present disclosure.

As illustrated in FIG. 29, first, the client terminal 20 acquires a secure element ID (step S9000). After the acquisition of the secure element ID, the client terminal 20 reads, from data on the chip corresponding to the secure element ID, service information for which a card is to be deactivated (step S9002). After the reading of the service information, the client terminal 20 transmits a card deactivation request including a log-in token, the secure element ID, and the result of reading (the recording state) to the server 10 (step S9004).

After the reception of the card deactivation request, the server 10 specifies the account on the basis of the log-in token (step S9006). After the specification of the account, the server 10 creates card information (step S9008), and transmits an access token to the client terminal 20 (step S9010). On receiving the access token, the client terminal 20 performs terminal authentication with the server 10, and reads card information (all data) (step S9012). After the terminal authentication and the reading of card information, the server 10 updates the state of the card (step S9014).

After the updating of the state of the card, the server 10 sets the blocking flag of the card information of the chip of the client terminal 20 to ON to lead to the inactive state (step S9016). After the updating of the blocking flag of the chip, the server 10 updates the state of the card (step S9018). After updating the state of the card, the server 10 deletes the area of the chip (step S9020). After the deletion of the area of the chip, the client terminal 20 transmits a card deactivation request including the access token and the result of area deletion to the server 10 (step S9022). After the reception of the card deactivation request, the server 10 transmits the result of the processing to the client terminal 20 (step S9024), and ends the card deactivation processing.

Hereinabove, operation examples of the server 10 and the client terminal 20 according to the embodiment of the present disclosure are described with reference to FIG. 22 to FIG. 29. Next, modification examples according to the embodiment of the present disclosure are described.

### <<7. Modification examples>>

In the following, modification examples of the embodiment of the present disclosure are described. Each of the modification examples described below may be applied to the embodiment of the present disclosure singly, or both of them may be applied to the embodiment of the present disclosure in combination. Each of the modification examples may be applied in place of the configuration described in the embodiment of the present disclosure, or may be applied in addition to the configuration described in the embodiment of the present disclosure.

### <7.1. First modification example>

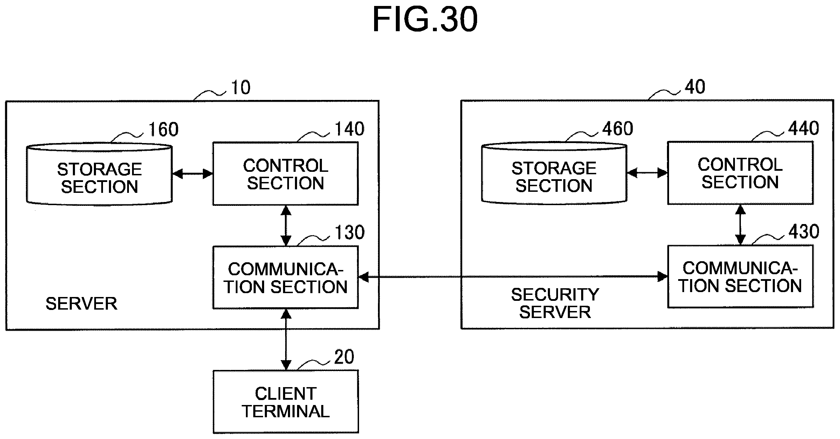

In the following, a first modification example according to the embodiment of the present disclosure is described with reference to FIG. 30. FIG. 30 is an explanatory diagram illustrating the first modification example according to the embodiment of the present disclosure.

In the embodiment described above, an example in which the first information processing apparatus is formed only of the server 10 is described; however, as illustrated in FIG. 30, the first information processing apparatus may be composed of the server 10 and a security server 40. The security server 40 has the function of managing important confidential information; this function is a function separated from the server 10. To achieve this function, the security server 40 includes a communication section 430, a control section 440, and a storage section 460.

The communication section 430 has a similar function to the communication section 130 described in the embodiment described above, and makes communication with the communication section 130. However, the communication section 430 can communicate only with the communication section 130, and does not make direct communication with the client terminal 20. The control section 440 has the function of controlling processing of managing important confidential information. The storage section 460 has the function of storing important confidential information. Since the storage section 460 deals with important confidential information, it preferably has tampering resistance.

As described above, the first information processing apparatus manages important confidential information by means of the security server 40, which is another server different from the server 10, and can thereby improve security.

### <7.2. Second modification example>

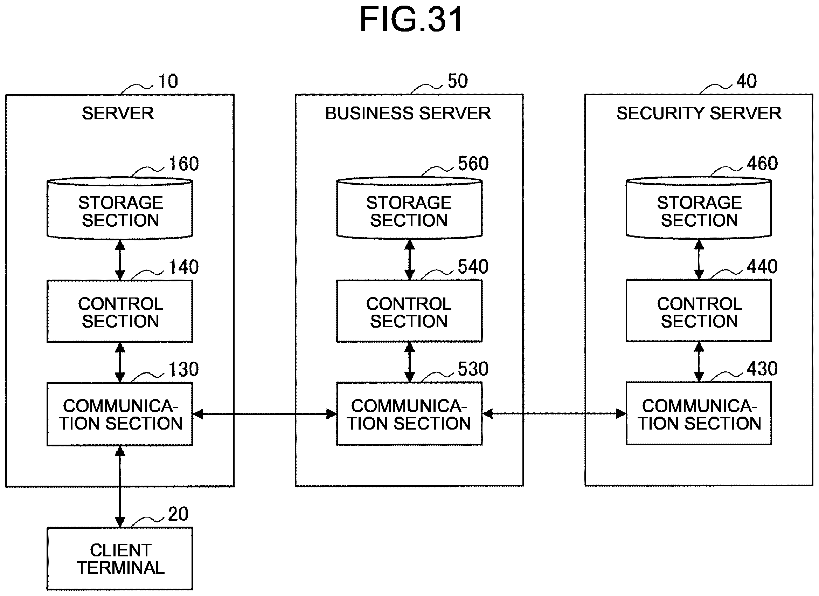

In the following, a second modification example according to the embodiment of the present disclosure is described with reference to FIG. 31. FIG. 31 is an explanatory diagram illustrating the second modification example according to the embodiment of the present disclosure.

In the embodiment described above, an example in which the first information processing apparatus is formed only of the server 10 is described; however, as illustrated in FIG. 31, the first information processing apparatus may be composed of the server 10, the security server 40, and a business server 50. The business server 50 is a server having the function of a part separated from the server 10. For example, the business server 50 has, among the functions that the server 10 before separation has, a function other than the function of providing Web API for clients.

The business server 50 includes a communication section 530, a control section 540, and a storage section 560 similarly to the server 10 described in the embodiment described above. The communication section 530 can make communication with the communication section 130 and the communication section 430. The communication section 530 makes communication with the communication section 130 via an intranet, and makes communication with the communication section 430 via an exclusive line. However, the communication section 530 does not make direct communication with the client terminal 20. The control section 540 has the function of performing processing other than processing regarding the function of providing Web API for clients described above. The storage section 560 has the function of storing information outputted by processing executed by the control section 540. In the present modification example, the business server 50 plays a role as a front-end server. The configuration of the security server 40 is the same as the configuration described in the first modification example.

The first information processing apparatus can improve processing efficiency by, as described above, being composed of a plurality of servers and causing each server to perform processing in a distributed manner. Further, like in the first modification example, important confidential information is managed by the security server 40, which is another server different from the server 10, and thereby security can be improved.

Hereinabove, modification examples according to the embodiment of the present disclosure are described with reference to FIG. 30 and FIG. 31.

### <<8. Conclusions>>

As described hereinabove, the server 10 according to the embodiment of the present disclosure (the first information processing apparatus) makes management while associating card information corresponding to a service with an account of a user. Further, the server 10 decides on and executes processing regarding card information on the basis of an account, a manipulation request by a user, the recording state of a chip of the client terminal 20, and card information associated with the account.

The server 10 can manage a plurality of cards regardless of the kind of service by, as described above, associating an account of a user with card information. Further, the server 10 can perform mutual transfer in accordance with a manipulation by a user while maintaining the integrity of the management state of card information in the server 10 and the recording state of card information in the client terminal 20.

Thus, it is possible to provide a new and improved information processing apparatus and a new and improved information processing method capable of improving the convenience of a plurality of IC cards in the same IC service.

Preferred embodiments of the present disclosure have been described in detail hereinabove with reference to the accompanying drawings, but the technical scope of the present disclosure is not limited to such examples. It is obvious that a person ordinarily skilled in the technical field of the present disclosure could arrive at various modification examples or revised examples within the scope of the technological ideas described in the claims, and it is naturally understood that such examples belong to the technical scope of the present disclosure.

Note that a series of processing performed by the respective devices described in the present specification may be achieved using any of software, hardware, and a combination of software and hardware. Programs that configure software are stored in advance in recording media (non-transitory media) provided inside or outside the respective devices, for example. Each program is read into a RAM when the computer executes the program, and is executed by a processor such as a CPU.

In addition, processing described in the present specification using flowcharts and sequence diagrams may not be necessarily executed in the illustrated order. Some process steps may be performed in parallel. Additional process steps may be employed, and some process steps may be omitted.

Furthermore, the advantageous effects described in the present specification are only descriptive or exemplary, and non-limiting. In other words, the technology according to the present disclosure affords, in addition to or instead of the foregoing advantageous effects, other advantageous effects which are obvious to a person skilled in the art from the descriptions of the present specification.

Note that the following configurations also fall within the technical scope of the present disclosure.
(1) An information processing apparatus comprising:
   a management section that makes management while associating service information corresponding to a service with identification information that specifies a user;
   a decision section that decides on processing regarding service information on a basis of the identification information acquired, an instruction by the user acquired, a recording state of a recording medium acquired, and service information associated with the acquired identification information; and
   an execution section that executes the processing decided on.
(2) The information processing apparatus according to (1), wherein,
   in a case where the instruction by the user is an instruction to bring a first piece of service information into a valid state in the recording medium, the first piece of service information selected by the user is managed in a valid state in the management section, and a second piece of service information regarding the same service as a service of the first piece of service information is recorded in the recording medium,
   the decision section decides to perform processing of updating the second piece of service information with the first piece of service information and bringing the first piece of service information in the recording medium into the valid state.
(3) The information processing apparatus according to (1) or (2), wherein,
   in a case where the instruction by the user is an instruction to bring a first piece of service information into a valid state in the recording medium, the first piece of service information selected by the user is managed in a valid state in the management section, and a second piece of service information regarding the same service as a service of the first piece of service information is not recorded in the recording medium,
   the decision section decides to perform processing of writing the first piece of service information on the recording medium and bringing the first piece of service information in the recording medium into the valid state.
(4) The information processing apparatus according to any one of (1) to (3), wherein,
   in a case where the instruction by the user is an instruction to bring a first piece of service information into an invalid state in the recording medium, and the first piece of service information selected by the user is in a valid state in the recording medium,
   the decision section decides to perform processing of bringing the first piece of service information into the invalid state.
(5) The information processing apparatus according to any one of (1) to (4), wherein,
   in a case where the instruction by the user is an instruction to newly create a first piece of service information, and a second piece of service information regarding the same service as a service of the first piece of service information exists in the recording medium,
   the decision section decides to perform processing of newly creating the first piece of service information in the management section and making management while associating the newly created first piece of service information with the identification information.
(6) The information processing apparatus according to any one of (1) to (5), wherein, when executing the processing, the execution section executes the processing after making synchronization between service information managed by the management section and service information recorded in the recording medium.
(7) The information processing apparatus according to any one of (1) to (6), wherein the management section makes management while associating the service information, identification information that specifies the user, and identification information that specifies the recording medium with each other.
(8) An information processing apparatus comprising:
   a control section that causes a recording state of service information corresponding to a service in a prescribed recording medium to be transmitted to an external apparatus managing service information, on a basis of an instruction by a user.
(9) The information processing apparatus according to (8), wherein the control section acquires a management state of the service information associated with identification information of the user managed by the external apparatus, and performs processing decided on a basis of a result of comparison between the recording state and the management state.
(10) The information processing apparatus according to (9), wherein,
   in a case where service information managed by the external apparatus is in a valid state, and the recording state and the management state do not coincide,
   the control section determines that service information recorded in the recording medium is in an invalid state.
(11) The information processing apparatus according to (9) or (10), wherein,
   in a case where service information managed by the information processing apparatus is in a valid state, and the recording state and the management state do not coincide,
   the control section determines that service information recorded in the recording medium is in a lost state, and makes a request of the user or the external apparatus to delete the service information.
(12) The information processing apparatus according to any one of (9) to (11), wherein,
   in a case where service information managed by the information processing apparatus is in a lost state,
   the control section determines that service information recorded in the recording medium is in a lost state, and makes a request of the user or the external apparatus to delete the service information.
(13) The information processing apparatus according to any one of (9) to (12), wherein,
   in a case where service information managed by the external apparatus is in an invalid state, and service information is not recorded in the recording medium,
   the control section determines that the service information managed by the external apparatus is under new creation.
(14) The information processing apparatus according to any one of (9) to (13), wherein,
   in a case where service information managed by the external apparatus is in a valid state and in a newest state, and the recording state and the management state coincide,
   the control section determines that the service information is in a state of waiting for resumption of processing, and makes a request of the user or the external apparatus to resume processing of the service information.
(15) The information processing apparatus according to any one of (9) to (14), wherein,
   in a case where service information managed by the information processing apparatus is in a valid state, but it is not settled whether the service information managed by the information processing apparatus is in a newest state or whether service information managed by the external apparatus is in a newest state, and the recording state and the management state coincide,
   the control section determines that the service information managed by the external apparatus is in a state of waiting for resumption of processing, and makes a request of the user or the external apparatus to resume processing of the service information.
(16) The information processing apparatus according to any one of (9) to (15), wherein,
   in a case where service information managed by the information processing apparatus is in a valid state and in a newest state, and the recording state and the management state coincide,
   the control section determines that service information recorded in the recording medium is in a valid state.
(17) The information processing apparatus according to any one of (9) to (16), wherein the control section causes a display device to display the result of comparison.
(18) The information processing apparatus according to (17), wherein the control section causes the display device to display an object indicating a state of the service information in the information processing apparatus, on a basis of the result of comparison.
(19) An information processing method that is executed by a processor, the method comprising:
   making management while associating service information corresponding to a service with identification information that specifies a user;
   deciding on processing regarding service information on a basis of the identification information acquired, an instruction by the user acquired, a recording state of a recording medium acquired, and service information associated with the acquired identification information; and
   executing the processing decided on.
(20) An information processing method that is executed by a processor, the method comprising:
   causing a recording state of service information corresponding to a service in a prescribed recording medium to be transmitted to an external apparatus managing service information, on a basis of an instruction by a user.

### Reference Signs List

- 10: SERVER
- 20: CLIENT TERMINAL
- 30: READER/WRITER
- 130: COMMUNICATION SECTION
- 140: CONTROL SECTION
- 142: MANAGEMENT SECTION
- 144: DECISION SECTION
- 146: EXECUTION SECTION
- 160: STORAGE SECTION
- 220: FIRST COMMUNICATION SECTION
- 230: CONTROL SECTION
- 240: DISPLAY SECTION
- 250: MANIPULATION SECTION
- 260: STORAGE SECTION
- 270: SECOND COMMUNICATION SECTION

## Claims

1. An information processing apparatus comprising:
a management section that makes management while associating service information corresponding to a service with identification information that specifies a user;
a decision section that decides on processing regarding service information on a basis of the identification information acquired, an instruction by the user acquired, a recording state of a recording medium acquired, and service information associated with the acquired identification information; and
an execution section that executes the processing decided on.

2. The information processing apparatus according to claim 1, wherein,
in a case where the instruction by the user is an instruction to bring a first piece of service information into a valid state in the recording medium, the first piece of service information selected by the user is managed in a valid state in the management section, and a second piece of service information regarding the same service as a service of the first piece of service information is recorded in the recording medium,
the decision section decides to perform processing of updating the second piece of service information with the first piece of service information and bringing the first piece of service information in the recording medium into the valid state.

3. The information processing apparatus according to claim 1, wherein,
in a case where the instruction by the user is an instruction to bring a first piece of service information into a valid state in the recording medium, the first piece of service information selected by the user is managed in a valid state in the management section, and a second piece of service information regarding the same service as a service of the first piece of service information is not recorded in the recording medium,
the decision section decides to perform processing of writing the first piece of service information on the recording medium and bringing the first piece of service information in the recording medium into the valid state.

4. The information processing apparatus according to claim 1, wherein,
in a case where the instruction by the user is an instruction to bring a first piece of service information into an invalid state in the recording medium, and the first piece of service information selected by the user is in a valid state in the recording medium,
the decision section decides to perform processing of bringing the first piece of service information into the invalid state.

5. The information processing apparatus according to claim 1, wherein,
in a case where the instruction by the user is an instruction to newly create a first piece of service information, and a second piece of service information regarding the same service as a service of the first piece of service information exists in the recording medium,
the decision section decides to perform processing of newly creating the first piece of service information in the management section and making management while associating the newly created first piece of service information with the identification information.

6. The information processing apparatus according to claim 1, wherein, when executing the processing, the execution section executes the processing after making synchronization between service information managed by the management section and service information recorded in the recording medium.

7. The information processing apparatus according to claim 1, wherein the management section makes management while associating the service information, identification information that specifies the user, and identification information that specifies the recording medium with each other.

8. An information processing apparatus comprising:
a control section that causes a recording state of service information corresponding to a service in a prescribed recording medium to be transmitted to an external apparatus managing service information, on a basis of an instruction by a user.

9. The information processing apparatus according to claim 8, wherein the control section acquires a management state of the service information associated with identification information of the user managed by the external apparatus, and performs processing decided on a basis of a result of comparison between the recording state and the management state.

10. The information processing apparatus according to claim 9, wherein,
in a case where service information managed by the external apparatus is in a valid state, and the recording state and the management state do not coincide,
the control section determines that service information recorded in the recording medium is in an invalid state.

11. The information processing apparatus according to claim 9, wherein,
in a case where service information managed by the information processing apparatus is in a valid state, and the recording state and the management state do not coincide,
the control section determines that service information recorded in the recording medium is in a lost state, and makes a request of the user or the external apparatus to delete the service information.

12. The information processing apparatus according to claim 9, wherein,
in a case where service information managed by the information processing apparatus is in a lost state,
the control section determines that service information recorded in the recording medium is in a lost state, and makes a request of the user or the external apparatus to delete the service information.

13. The information processing apparatus according to claim 9, wherein,
in a case where service information managed by the external apparatus is in an invalid state, and service information is not recorded in the recording medium,
the control section determines that the service information managed by the external apparatus is under new creation.

14. The information processing apparatus according to claim 9, wherein,
in a case where service information managed by the external apparatus is in a valid state and in a newest state, and the recording state and the management state coincide,
the control section determines that the service information is in a state of waiting for resumption of processing, and makes a request of the user or the external apparatus to resume processing of the service information.

15. The information processing apparatus according to claim 9, wherein,
in a case where service information managed by the information processing apparatus is in a valid state, but it is not settled whether the service information managed by the information processing apparatus is in a newest state or whether service information managed by the external apparatus is in a newest state, and the recording state and the management state coincide,
the control section determines that the service information managed by the external apparatus is in a state of waiting for resumption of processing, and makes a request of the user or the external apparatus to resume processing of the service information.

16. The information processing apparatus according to claim 9, wherein,
in a case where service information managed by the information processing apparatus is in a valid state and in a newest state, and the recording state and the management state coincide,
the control section determines that service information recorded in the recording medium is in a valid state.

17. The information processing apparatus according to claim 9, wherein the control section causes a display device to display the result of comparison.

18. The information processing apparatus according to claim 17, wherein the control section causes the display device to display an object indicating a state of the service information in the information processing apparatus, on a basis of the result of comparison.

19. An information processing method that is executed by a processor, the method comprising:
making management while associating service information corresponding to a service with identification information that specifies a user;
deciding on processing regarding service information on a basis of the identification information acquired, an instruction by the user acquired, a recording state of a recording medium acquired, and service information associated with the acquired identification information; and
executing the processing decided on.

20. An information processing method that is executed by a processor, the method comprising:
causing a recording state of service information corresponding to a service in a prescribed recording medium to be transmitted to an external apparatus managing service information, on a basis of an instruction by a user.
